# EUROPEAN PATENT APPLICATION

(11) **EP 4 694 273 A1**
(43) Date of publication of application: **11.02.2026**
(21) Application number: 24779502.4
(22) Date of filing: 14.03.2024
(51) Int. Cl.: H04W 16/28, H04W 16/30, H04W 16/32, H04W 36/04, H04W 48/10, H04W 64/00

(54) **BASE STATION, TERMINAL DEVICE, COMMUNICATION METHOD, AND COMMUNICATION SYSTEM**

(30) Priority: 29.03.2023 JP 2023054078
(71) Applicant: Sony Group Corporation, Tokyo 108-0075 (JP)
(72) Inventor: MATSUDA, Hiroki, Tokyo 108-0075 (JP); KIMURA, Ryota, Tokyo 108-0075 (JP); TAKAHASHI, Mitsuki, Tokyo 108-0075 (JP); UCHIYAMA, Hiromasa, Tokyo 108-0075 (JP)
(74) Representative: Witte, Weller & Partner Patentanwälte mbB
(86) International application number: PCT/JP2024/009923
(87) International publication number: WO 2024/203373

(57) **Abstract**

A base station includes: a formation unit configured to form a point cell by concentrating power at a specific point using cooperative control of a plurality of antennas; and a determination processing unit configured to execute processing for determining the point cell to which a terminal apparatus belongs.

## Description

### Field

The present disclosure relates to a base station, a terminal apparatus, a communication method, and a communication system.

### Background

Technologies related to wireless communication have been actively developed. The next generation wireless communication is expected to achieve further improvement of communication performance (for example, improvement of frequency utilization efficiency). As one of techniques to improve frequency utilization efficiency, a technique of concentrating power at a specific point using a phase difference of a near field is disclosed (for example, Non Patent Literature 1).

### Citation List

### Non Patent Literature

Non Patent Literature 1: Mingyao Cui, Linglong Dai, Robert Schober, and Lajos Hanzo, "Near-Field Wideband Beamforming for Extremely Large Antenna Arrays," arXiv preprint arXiv: 2109.10054, Sep. 2021.

### Summary

### Technical Problem

The above technique (technique to perform power concentration at a specific point) will presumably enable more advanced spatial multiplexing. However, simply applying this technique to a radio access network will not necessarily lead to the achievement of wireless communication with high communication performance (for example, higher frequency utilization efficiency, larger capacity, higher speed, lower latency, higher reliability, massive/high-density, lower power consumption, or lower processing load).

In view of this, the present disclosure proposes a base station, a terminal apparatus, a communication method, and a communication system capable of achieving high communication performance.

Note that the above problem or target is merely one of a plurality of problems or targets that can be solved or achieved by a plurality of embodiments disclosed in the present specification.

### Solution to Problem

In order to solve the above problem, a base station according to one embodiment of the present disclosure includes: a formation unit configured to form a point cell by concentrating power at a specific point using cooperative control of a plurality of antennas; and a determination processing unit configured to execute processing for determining the point cell to which a terminal apparatus belongs.

### Brief Description of Drawings

FIG. 1 is a diagram for illustrating a power concentration technique (pointforming).
FIG. 2 is a diagram for illustrating a near field and a far field.
FIG. 3 is a diagram illustrating a Fraunhofer distance defining a boundary between a near field and a far field.
FIG. 4 is a diagram illustrating an example of pointforming using distributed antennas.
FIG. 5 is a diagram illustrating outline of a solution in the present embodiment.
FIG. 6 is a diagram illustrating a configuration of a communication system according to the present embodiment.
FIG. 7 is a diagram illustrating a configuration of a management apparatus according to the present embodiment.
FIG. 8 is a diagram illustrating a configuration of a base station according to the present embodiment.
FIG. 9 is a diagram illustrating a configuration of a relay station according to the present embodiment.
FIG. 10 is a diagram illustrating a configuration of a terminal apparatus according to the present embodiment.
FIG. 11 is a flowchart illustrating an example of initial connection processing.
FIG. 12 is a diagram illustrating a contention based random access procedure.
FIG. 13 is a diagram illustrating a non-contention based random access procedure.
FIG. 14 is a diagram illustrating a 2-Step random access procedure.
FIG. 15 is a diagram for illustrating an example of a point cell determination means based on power of a synchronization signal.
FIG. 16 is a diagram for illustrating another example of a point cell determination means based on power of a synchronization signal.
FIG. 17 is a diagram illustrating a sequence example of initial access processing related to the means of determining a point cell during 4-Step RACH processing.
FIG. 18 is a diagram illustrating a sequence example of initial access processing related to the means of determining a wide cell and a point cell during 4-Step RACH processing.
FIG. 19 is a diagram illustrating a sequence example of initial access processing related to the means of determining a point cell during 2-Step RACH processing.
FIG. 20 is a diagram illustrating a sequence example of initial access processing related to the means of determining a wide cell and a point cell during 2-Step RACH processing.
FIG. 21 is a diagram illustrating a sequence example of initial access processing related to the means of determining a point cell during 4-Step RACH processing.
FIG. 22 is a diagram illustrating a sequence example of initial access processing related to the means of determining a point cell during 4-Step RACH processing.
FIG. 23 is a diagram illustrating a sequence example of initial access processing related to the means of determining a point cell during 4-Step RACH processing.
FIG. 24 is a diagram illustrating a sequence example of initial access processing related to the means of determining a point cell during 4-Step RACH processing.
FIG. 25 is a diagram illustrating a sequence example of initial access processing related to the means of determining a point cell during 4-Step RACH processing.
FIG. 26 is a diagram illustrating a sequence example of initial access processing related to the means of determining a point cell during 2-Step RACH processing.
FIG. 27 is a diagram illustrating a sequence example of initial access processing related to the means of determining a point cell during 2-Step RACH processing.
FIG. 28 is a diagram illustrating a sequence example of initial access processing related to the means of determining a point cell during 2-Step RACH processing.
FIG. 29 is a diagram illustrating a sequence example of initial access processing related to the means of determining a point cell by an anchor cell after 4-Step RACH processing.
FIG. 30 is a diagram illustrating a sequence example of initial access processing related to the means of determining a point cell by an anchor cell after 2-Step RACH processing.
FIG. 31 is a diagram for illustrating an example of CU/DU/RU separation of functions of the base station 20.
FIG. 32 is a diagram illustrating an example of separation of processing related to pointforming.
FIG. 33 is a diagram illustrating a mapping example of a conventional reference signal.
FIG. 34 is a diagram illustrating an example of mapping of reference signals according to the present embodiment.
FIG. 35 is a diagram illustrating another example of mapping of reference signals according to the present embodiment.

### Description of Embodiments

Embodiments of the present disclosure will be described below in detail with reference to the drawings. In each of the following embodiments, the identical sites are denoted by identical reference symbols, and a repetitive description thereof will be omitted.

Moreover, in the present specification and the drawings, a plurality of components having substantially the same functional configuration will be distinguished by attaching different alphabets or numbers after the same reference numerals. For example, a plurality of configurations having substantially the same functional configuration are distinguished as necessary, such as terminal apparatuses 40₁, 40₂, and 40₃. However, when it is not particularly necessary to distinguish between the plurality of components having substantially the same functional configuration, only the same reference numeral is given. For example, in a case where it is not necessary to particularly distinguish the terminal apparatuses 40₁, 40₂, and 40₃, they are simply referred to as the terminal apparatus 40.

One or a plurality of embodiments (including implementation examples and modifications) described below can each be implemented independently. On the other hand, at least some of the plurality of embodiments described below may be appropriately combined with at least some of other embodiments. The plurality of embodiments may include novel features different from each other. Accordingly, the plurality of embodiments can contribute to achieving or solving different objects or problems, and can exhibit different effects.

The present disclosure will be described in the following order of items.
1. Overview
   1-1. Problem
   1-2. Power concentration technique (pointforming)
   1-3. Outline of solution
2. Configuration of communication system
   2-1. Configuration of management apparatus
   2-2. Configuration of base station
   2-3. Configuration of relay station
   2-4. Configuration of terminal apparatus
3. Basic operation of communication system
   3-1. Initial connection processing
   3-2. Random access procedure
   3-3. Details of random access procedure in NR
   3-4. 2-STEP RACH in NR
4. Operation of communication system
   4-1. Outline of point cell determination means
   4-2. Details of point cell determination means
5. Sequence example
   5-1. Point cell determination means based on synchronization signal
   5-2. Point cell determination means based on position information
   5-3. Point cell determination means based on anchor cell
6. Modification
   6-1. Function separation
   6-2. Pointforming
   6-3. Reference signal
   6-4. Scheduling
   6-5. Other modifications
7. Conclusion

### <<1. Overview>>

Before describing the present embodiment in detail, an outline of the present embodiment will be described.

### <1-1. Problem>

In recent years, next-generation wireless communication has been under discussion. In order to meet requirements to achieve advancement such as higher speed communication beyond 5G NR, low latency and high reliability communication, massive/high-density communication, and simultaneous support of a plurality of these, there is a demand for further improvement in frequency utilization efficiency. The techniques of improving frequency utilization efficiency include a disclosed technique of concentrating power at a specific point using a phase difference of a near field (hereinafter, simply referred to as a power concentration technique).

The power concentration technique will presumably enable more advanced spatial multiplexing. However, simply applying this technique to a radio access network will not necessarily lead to the achievement of wireless communication with high communication performance (for example, higher frequency utilization efficiency, larger capacity, higher speed, lower latency, higher reliability, massive/high-density, lower power consumption, or lower processing load).

For example, in a case where advanced spatial multiplexing is achieved by the power concentration technique, there will presumably be various problems such as occurrence of frequent initial access just by continuously using the conventional initial access procedure. In view of this, the present embodiment will examine a means of initial access procedure when applying the power concentration technique to the wireless communication network.

In the following description, the power concentration technique will be denoted as pointforming in some cases.

### <1-2. Power concentration technique (pointforming)>

Before describing an outline of the solution, a power concentration technique (pointforming) will be described.

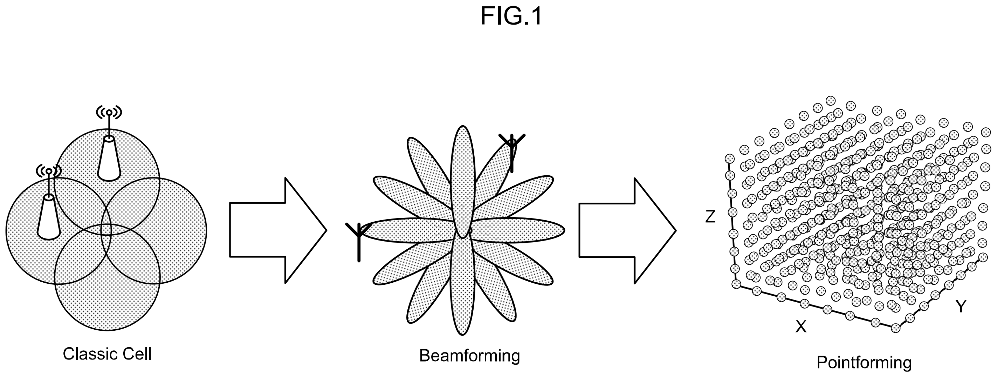

FIG. 1 is a diagram for illustrating a power concentration technique (pointforming). In conventional cellular mobile communication, a base station (for example, an eNB (eNodeB), a gNB (gNodeB), or a RAN node (including EUTRAN and NGRAN)) forms a planar or beam-shaped cell. In the example of FIG. 1, the diagram on the left side (classic cell) is a diagram illustrating a state where the base station forms a planar cell, while the diagram in the center (beamforming) is a diagram illustrating a state where the base station forms a beam-shaped cell. With this configuration, the base station provides communication to the terminal apparatus (for example, user equipment (UE)). In order to satisfy requirements to achieve advanced technologies, such as further improvement in high-speed communication and low latency and high reliability communication, the next-generation cellular communications are required to increase frequency utilization efficiency to the utmost limit.

Techniques currently attracting attention include a technique of forming a cell using points (for example, power concentration technique). This is a technique of using cooperative control of a large number of transmission antennas to form a point-shaped cell, being a technique beyond spatial separation by conventional beamforming. In the example of FIG. 1, the diagram on the right side (pointforming) is a diagram illustrating the state where the base station forms a point-shaped cell. Hereinafter, this technique is denoted as pointforming, but may be denoted by using other notations. Although conventional beamforming has not been able to perform multiplexing of beam directions, the pointforming can achieve three-dimensional multiplexing. This enables further enhancement of multi-terminal simultaneous communication. In addition, pointforming can suppress interference with multiple terminals. This leads to improvement in communication quality of the entire system, reduction in a communication disconnection rate, and further enhancement of multi-connection communication.

Pointforming is a technique based on the phase difference in individual radio waves transmitted from a large number of transmission antennas in consideration, and performs cooperative operation of the large number of transmission antennas to apply in-phase combining on the radio waves at a specific point, thereby maximizing the reception power at the specific point. Since radio waves transmitted from the large number of transmission antennas are received at random phases at points other than the specific point, reception power is suppressed by averaging. This achieves pointforming of forming a cell at a specific point. Here, in the phase difference control of the radio waves transmitted from the large number of transmission antennas, the control apparatus may control the initial phase of each transmission antenna or may control the amplitude of each transmission antenna, for example.

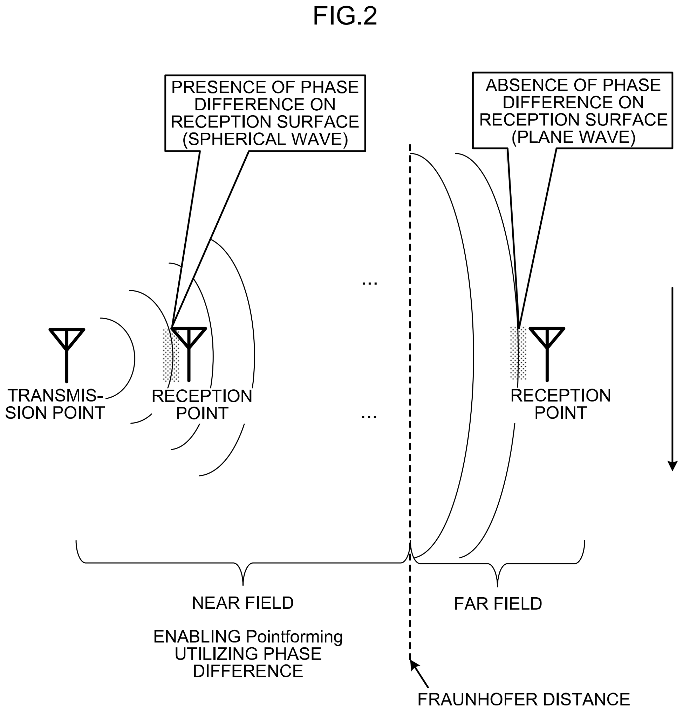

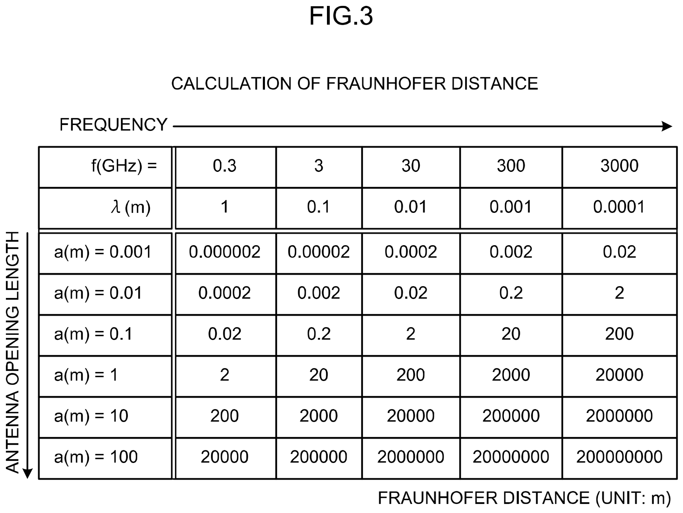

At this time, in a case where a radio wave is transmitted from a single transmission panel having a large number of transmission antenna elements, it is also allowable to take characteristics of the near field in consideration. FIG. 2 is a diagram for illustrating a near field and a far field. The base station has been conventionally supposed to communicate with a remote terminal apparatus such as a smartphone. This has led to conventional examination on the premise of a far field as illustrated on the right side of FIG. 2. However, in the future, communication using a larger transmission panel is to be presumably conducted. This leads to a possibility of enabling the communication in consideration of a phase difference which is a feature of the near-field region. Pointforming may be utilized in the near-field region. FIG. 3 is a diagram illustrating a Fraunhofer distance defining a boundary between a near field and a far field.

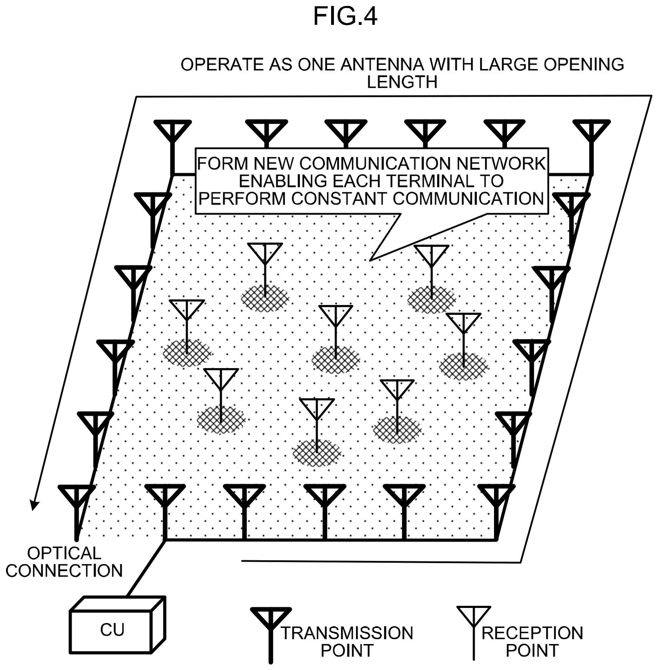

Here, while the above has described an example of applying pointforming in the near field, pointforming can be implemented in an environment that can take a phase difference into consideration. Therefore, in an environment including a large number of distributed antennas around a reception point, it is possible to perform pointforming regardless of the Fraunhofer distance. FIG. 4 is a diagram illustrating an example of pointforming using distributed antennas. In the example of FIG. 4, the base station includes a control unit (in the example of FIG. 4, a central unit (CU)) that controls a plurality of antennas, thereby controlling the transmission antennas. In the example of FIG. 4, the CU and the transmission antennas are optically connected, but need not necessarily be optically connected. Note that each of a plurality of transmission points (transmission antennas) may be one base station. Furthermore, one or a plurality of base stations may control a plurality of transmission points (transmission antennas). Furthermore, the plurality of antennas (a plurality of transmission points) may be one or a plurality of transmission panels including a plurality of transmission antennas (antenna elements).

### <1-3. Outline of solution>

Based on the above, an outline of the solution of the present embodiment will be described.

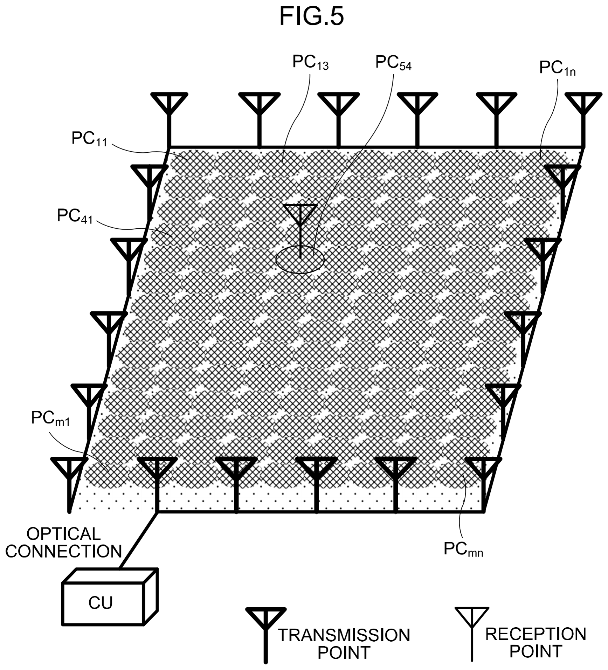

FIG. 5 is a diagram illustrating outline of the solution in the present embodiment. The communication system of the present embodiment includes a base station and a terminal apparatus. In the drawing, a transmission point indicates a transmission antenna included in the base station or controlled by the base station. The reception point indicates a reception antenna included in the terminal apparatus.

The base station forms a point cell by power concentration technique (pointforming). For example, the base station includes a control unit (in the example of FIG. 5, a central unit (CU)) that controls a plurality of antennas). The base station performs cooperative control of the plurality of antennas to concentrate power at a specific point, thereby forming a point cell. In the example of FIG. 5, the base station forms m×m point cells PC (point cells PC₁₁ to PCₘₙ) covering an area surrounded by the transmission antenna.

The base station executes processing for determining a point cell to which the terminal apparatus belongs. For example, the base station transmits, to the terminal apparatus, a plurality of synchronization signals for the terminal apparatus to identify a point cell. Subsequently, the terminal apparatus determines the point cell to which the terminal apparatus belongs based on the synchronization signal. In the example of FIG. 5, the terminal apparatus determines the point cell PC₅₄ as the point cell PC to which the terminal apparatus belongs. The base station may determine the point cell PC to which the terminal apparatus belongs based on information from the terminal apparatus.

Subsequently, the terminal apparatus performs wireless communication using the determined point cell PC₅₄.

In this manner, in the present embodiment, the base station performs processing for determining the point cell to which the terminal apparatus belongs. This makes it possible for the terminal apparatus to efficiently access the point cell. This makes it possible for the communication system to achieve high communication performance.

The outline of the present embodiment has been described above. Hereinafter, a communication system 1 of the present embodiment will be described in detail.

### <<2. Configuration of communication system>>

First, a configuration of the communication system 1 will be described.

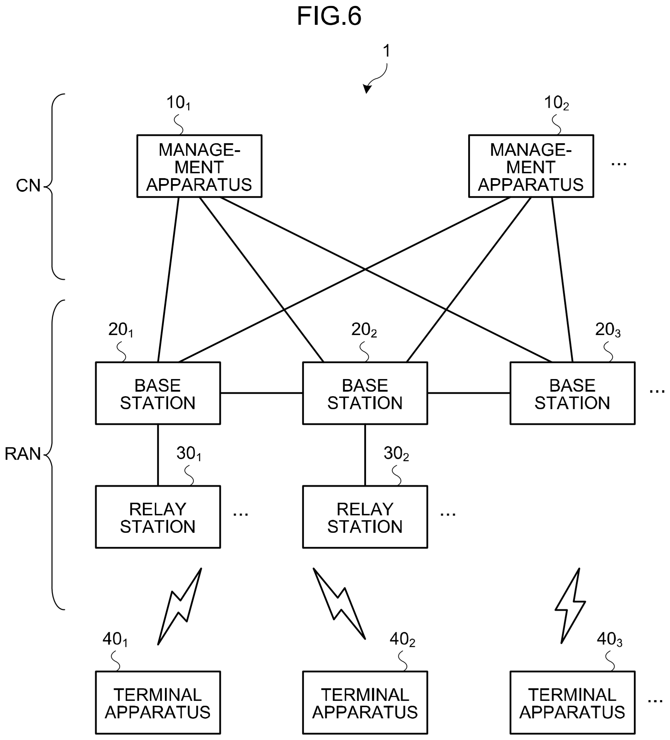

FIG. 6 is a diagram illustrating a configuration example of a communication system 1 according to the present embodiment. The communication system 1 includes a management apparatus 10, a base station 20, a relay station 30, and a terminal apparatus 40. With individual wireless communication apparatuses constituting the communication system 1 operating in cooperation with each other, the communication system 1 provides a user with a wireless network capable of mobile communication. The wireless network of the present embodiment includes a radio access network RAN and a core network CN, for example. In the present embodiment, the wireless communication apparatus is an apparatus having a wireless communication function, and in the example of FIG. 6, the apparatus corresponds to the base station 20, the relay station 30, and the terminal apparatus 40.

The communication system 1 may include a plurality of management apparatuses 10, a plurality of base stations 20, a plurality of relay stations 30, and a plurality of terminal apparatuses 40. In the example of FIG. 6, the communication system 1 includes management apparatuses 10₁ and 10₂ as the management apparatus 10, and includes base stations 20₁, 20₂ and 20₃ as the base station 20. Furthermore, the communication system 1 includes relay stations 30₁ and 30₂ as the relay station 30, and includes terminal apparatuses 40₁, 40₂, and 40₃ as the terminal apparatus 40.

The terminal apparatus 40 may be configured to connect to the network using a Radio Access Technology (RAT) such as Long Term Evolution (LTE), New Radio (NR), 6G, Wi-Fi, or Bluetooth (registered trademark). At this time, the terminal apparatus 40 may be configured to be able to use different radio access technologies (wireless communication method). For example, the terminal apparatus 40 may be configured to be able to use NR and Wi-Fi. Furthermore, the terminal apparatus 40 may be configured to be able to use different cellular communication technologies (for example, LTE and NR, or 6G). LTE and NR are a type of cellular communication technology, and enable mobile communication of terminal apparatuses by using cellular arrangement of a plurality of areas covered by base stations. 6G is also a type of cellular communication technology, and enable mobile communication of terminal apparatuses by using cellular arrangement of a plurality of areas covered by base stations.

In the following, it is assumed that "LTE" includes LTE-advanced (LTE-A), LTE-advanced pro (LTE-A Pro), and evolved universal terrestrial radio access (EUTRA). In addition, it is assumed that NR includes new radio access technology (NRAT) and further EUTRA (FEUTRA). A single base station 20 may manage a plurality of cells. In the following, a cell corresponding to LTE may be referred to as an LTE cell, and a cell corresponding to NR may be referred to as an NR cell.

NR is the next generation (fifth generation) radio access technology subsequent to LTE (fourth generation communication including LTE-Advanced and LTE-Advanced Pro). The NR is a radio access technology that can support various use cases including enhanced mobile broadband (eMBB), massive machine type communications (mMTC), and Ultra-Reliable and Low Latency Communications (URLLC). NR is standardized by Rel-15 of 3GPP (registered trademark) as a technical framework supporting a usage scenario, a requirements, a deployment scenario, and the like in these use cases. Furthermore, Beyond 5G and 6G are required to simultaneously achieve a plurality of axes of high speed and large capacity, low latency/high reliability, and multiple simultaneous connection.

6G is a cellular communication technology of a next generation of NR or 5GS (5G system) that is fifth generation mobile communication, and includes a radio access technology and a network technology between a base station, a core network, and a data network. 6G may include technologies for achieving sophistication (referred to as extreme connectivity) of each technology of eMBB, mMTC, and URLLC, which have been defined as a main use case or a requirement in the NR, as well as new technologies in new aspects. For example, the new technologies can presumably include technologies related to artificial intelligence (AI: including cognitive network, AI native Air Interface), sensing (including Rader sensing, network as a sensor), and terahertz communication.

The wireless network may be compatible with a Radio Access Technology (RAT) such as Long Term Evolution (LTE), New Radio (NR) and 6G. LTE, NR, and 6G are a type of cellular communication technology, and enable mobile communication of terminal apparatuses by using cellular arrangement of a plurality of areas covered by base stations. The radio access method used by the communication system 1 is not limited to LTE, NR, or 6G, and may be other radio access methods such as wideband code division multiple access (W-CDMA) and code division multiple access 2000 (cdma2000), for example.

The base station 20 and the relay station 30 may each be a terrestrial station or a non-terrestrial station. The non-terrestrial station may be a satellite station or an aircraft station. When the non-terrestrial station is a satellite station, the wireless network may be a Bent-pipe (Transparent) mobile satellite communication system.

In the present embodiment, the terrestrial station (also referred to as a terrestrial base station) refers to a base station or a relay station installed on the terrestrial. The "ground" represents not only a land but also a terrestrial location in a broad sense including underground, above-water, and underwater. Note that, in the following description, the description of "terrestrial station" may be referred to as a "gateway".

The base station in LTE may be referred to as Evolved Node B (eNodeB) or eNB. NR base stations may be referred to as gNodeB or gNB. 6G base stations may be referred to as 6G NodeB (6GNB). In LTE, NR, and 6G, a terminal apparatus (also referred to as a mobile station, or terminal) may be referred to as User Equipment (UE). The terminal apparatus is a type of communication apparatus, and is also referred to as a mobile station or a terminal.

The terminal apparatus 40 may be connectable to the network using a radio access technology (wireless communication method) other than LTE, NR, 6G, Wi-Fi, or Bluetooth. For example, the terminal apparatus 40 may be connectable to the network by using low power wide area (LPWA) communication. Furthermore, the terminal apparatus 40 may be connectable to the network using wireless communication of a proprietary standard.

Here, LPWA communication is wireless communication that enables low-power wide-range communication. For example, the LPWA wireless is Internet of Things (IoT) wireless communication using a specified low power wireless (for example, the 920 MHz band) or an Industry-Science-Medical (ISM) band. The LPWA communication used by the terminal apparatus 40 may conform to the LPWA standard. Examples of the LPWA standard include ELTRES, ZETA, SIGFOX, LoRaWAN, and NB-Iot. Naturally, the LPWA standard is not to be limited thereto, and may be other LPWA standards.

Each wireless communication apparatus in FIG. 6 may be considered as an apparatus in a logical sense. That is, a part of each wireless communication apparatus may be implemented by a virtual machine (VM), a container, a docker, or the like, and they may be implemented on physically the same piece of hardware.

In the present embodiment, the concept of the "wireless communication apparatus" includes not only a portable mobile apparatus (terminal apparatus) such as a mobile terminal but also an apparatus installed in a structure or a mobile body. The structure or a mobile body itself may be regarded as a wireless communication apparatus. In addition, the concept of the wireless communication apparatus includes not only the terminal apparatus 40 but also the base station 20 and the relay station 30. The wireless communication apparatus is a type of processing apparatus and information processing apparatus. The wireless communication apparatus can be rephrased as a transmission apparatus or a reception apparatus.

In the present embodiment, the resource indicates, for example, Frequency, Time, Resource Element (including REG, CCE, CORESET), Resource Block, Bandwidth Part, Component Carrier, Symbol, Sub-Symbol, Slot, Mini-Slot, Subslot, Subframe, Frame, PRACH occasion, Occasion, Code, Multi-access physical resource, Multi-access signature, and Subcarrier Spacing (Numerology), and the like.

Hereinafter, configurations of individual wireless communication apparatuses included in the communication system 1 will be specifically described. The configuration of each wireless communication apparatus illustrated below is just an example. The configuration of each wireless communication apparatus may differ from the configuration below.

### <2-1. Configuration of management apparatus>

The management apparatus 10 is an information processing apparatus (computer) that manages a wireless network. For example, the management apparatus 10 is an information processing apparatus that manages communication of the base station 20. The management apparatus 10 may be a device having a function as a Mobility Management Entity (MME), for example. The management apparatus 10 may be an apparatus having a function as an Access and Mobility Management Function (AMF) and/or a Session Management Function (SMF). The MME, the AMF, and the SMF are control plane network function nodes in the core network. The management apparatus 10 may be an apparatus having a function as a 6G control plane network function (6G CPNF). The 6G CPNF may include one or a plurality of logical nodes.

Naturally, the functions of the management apparatus 10 are not to be limited to MME, AMF, SMF, or 6G CPNF. The management apparatus 10 may be a device having a function as a Network Slice Selection Function (NSSF), an Authentication Server Function (AUSF), a Policy Control Function (PCF), or Unified Data Management (UDM). Furthermore, the management apparatus 10 may be a device having a function as a Home Subscriber Server (HSS).

Note that the management apparatus 10 may have a function of a gateway. For example, the management apparatus 10 may have a function as a Serving Gateway (S-GW) or a Packet Data Network Gateway (P-GW). Furthermore, the management apparatus 10 may have a function as a User Plane Function (UPF). At this time, the management apparatus 10 may have a plurality of UPFs. The management apparatus 10 may be an apparatus having a function as a 6G control user plane network function (6G UPNF).

The core network includes a plurality of network functions. Each network function may be integrated into one physical device or distributed to a plurality of physical devices. That is, the management apparatus 10 can be disposed in a plurality of devices as distributed arrangement. Furthermore, this distributed arrangement may be controlled to be performed dynamically. The base station 20 and the management apparatus 10 constitute one network, and provide a wireless communication service to the terminal apparatus 40. The management apparatus 10 is connected to the Internet, and the terminal apparatus 40 can use various services provided over the Internet via the base station 20.

Note that the management apparatus 10 does not necessarily have to be a device constituting a core network. For example, it is assumed that the core network is a core network of Wideband Code Division Multiple Access (W-CDMA) or Code Division Multiple Access 2000 (cdma2000). At this time, the management apparatus 10 may be a device that functions as a Radio Network Controller (RNC).

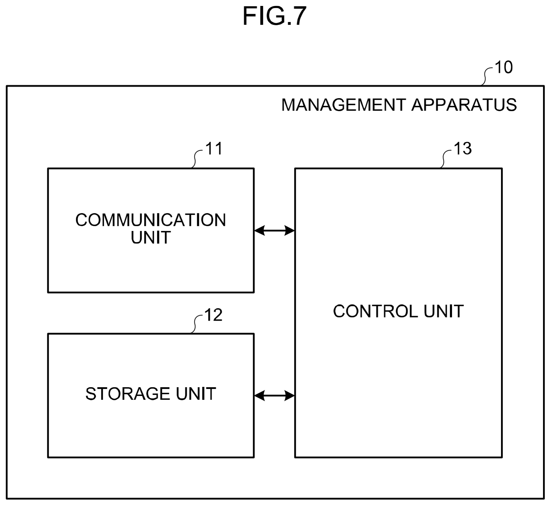

FIG. 7 is a diagram illustrating a configuration of the management apparatus 10 according to the present embodiment. The management apparatus 10 includes a communication unit 11, a storage unit 12, and a control unit 13. The configuration illustrated in FIG. 7 is a functional configuration, and the hardware configuration may be different from this configuration. The functions of the management apparatus 10 may be implemented in a statically or dynamically distributed form in a plurality of physically separated configurations. The management apparatus 10 may be constituted with a plurality of server apparatuses.

The communication unit 11 is a communication interface for communicating with a wireless communication apparatus (for example, the base station 20 or the relay station 30). The communication unit 11 may be a network interface, or may be a device connection interface. The communication unit 11 may be a local area network (LAN) interface such as a network interface card (NIC), or may be a universal serial bus (USB) interface including a USB host controller, a USB port, and the like. The communication unit 11 may be a wired interface, or may be a wireless interface. The communication unit 11 functions as a communication means of the management apparatus 10. The communication unit 11 is controlled by the control unit 13.

The storage unit 12 is a readable/writable storage device such as dynamic random access memory (DRAM), static random access memory (SRAM), flash memory, or a hard disk. The storage unit 12 functions as a storage means in the management apparatus 10. The storage unit 12 stores, for example, a connection state of the terminal apparatus 40. The storage unit 12 stores a radio resource control (RRC) state or an EPS connection management (ECM) state or a 5G system connection management (CM) state of the terminal apparatus 40. The storage unit 12 may function as a unit referred to as "home memory" (user information database) that stores the position information of the terminal apparatus 40.

The control unit 13 is a controller that controls individual components of the management apparatus 10. The control unit 13 may be implemented by a processor such as a central processing unit (CPU) or a micro processing unit (MPU), for example. Specifically, the control unit 13 may be implemented by execution of various programs stored in the storage device inside the management apparatus 10 by the processor using random access memory (RAM) or the like as a work area. The control unit 13 may be implemented by an integrated circuit such as an application specific integrated circuit (ASIC) or a field programmable gate array (FPGA). Furthermore, the control unit 13 may be implemented by a Graphics Processing Unit (GPU). The CPU, MPU, ASIC, FPGA, and GPU can all be regarded as controllers. The control unit 13 may include a plurality of physically separated objects. For example, the control unit 13 may include a plurality of semiconductor chips.

### <2-2. Configuration of base station>

The base station 20 is a wireless communication apparatus that performs wireless communication with other wireless communication apparatuses (for example, the relay station 30, the terminal apparatus 40 or another base station 20). The base station 20 may wirelessly communicate with the terminal apparatus 40 via the relay station 30, or may directly perform wireless communication with the terminal apparatus 40.

The base station 20 is an apparatus corresponding to a radio base station (Base Station, Node B, eNB, gNB, or 6GNB, etc.) or a radio access point. The base station 20 may be a radio relay station. The base station 20 may be an optical link apparatus referred to as a Remote Radio Head (RRH). Furthermore, the base station 20 may be a receiving station such as a Field Pickup Unit (FPU). The base station 20 may be an Integrated Access and Backhaul (IAB) donor node or an IAB relay node that provides a radio access channel and a radio backhaul channel by using time division multiplexing, frequency division multiplexing, or space division multiplexing.

The radio access technology used by the base station 20 may be a cellular communication technology. The radio access technology used by the base station 20 may be a wireless LAN technology. For example, the radio access technology used by the base station 20 may be a low power wide area (LPWA) communication technology. Note that the radio access technology used by the base station 20 is not limited thereto, and may be other radio access technologies. The wireless communication used by the base station 20 may be wireless communication using a millimeter wave or wireless communication using a terahertz wave (THz wave). The wireless communication used by the base station 20 may be wireless communication using radio waves or wireless communication (optical wireless communication) using infrared rays or visible light. The base station 20 may be capable of Non-Orthogonal Multiple Access (NOMA) communication with the terminal apparatus 40. Here, NOMA communication refers to communication (transmission, reception, or both) using non-orthogonal resources. Note that the base station 20 may be capable of performing NOMA communication with another base station 20.

The base station 20 may be capable of communicating with each other via a base station-core network interface (for example, NG Interface, S1 Interface, or the like). This interface may be implemented as wired or wireless interface. Furthermore, the base stations may be capable of performing mutual communication with each other via an inter-base station interface (for example, Xn Interface, X2 Interface, F1 Interface, or the like). This interface may be implemented as wired or wireless interface.

The base station (also referred to as a "base station apparatus") conceptually includes not only a donor base station but also a relay base station (also referred to as a "relay station"). The relay base station may be any one of RF Repeater, Smart Repeater, and Intelligent Surface. A base station conceptually includes not only a structure having a function of a base station but also a device installed in the structure.

Examples of the structure include a building such as a high-rise building, a house, a steel tower, a station facility, an airport facility, a harbor facility, an office building, a school building, a hospital, a factory, a commercial facility, or a stadium. The structure conceptually includes not only buildings but also non-building structures such as tunnels, bridges, dams, fences, and steel columns, as well as facilities such as cranes, gates, and windmills. The structure conceptually includes not only land-based (ground-based, in a narrow sense) structures or underground structures but also structures on the water, such as a jetty or a mega-float, and underwater structures such as an ocean observation facility. The base station can also be rephrased as an information processing apparatus.

The base station 20 may be a donor station or a relay station. The base station 20 may be a fixed station or a mobile station. The mobile station is a wireless communication apparatus (for example, a base station) configured to be movable. At this time, the base station 20 may be a device installed on a mobile body, or may be a mobile body itself. For example, a relay station having mobility can be regarded as the base station 20 as a mobile station. In addition, a device designed to have mobility, such as an Unmanned Aerial Vehicle (UAV) represented by a drone, or a smartphone, and having a function of a base station (at least a part of the function of a base station) also corresponds to the base station 20 as a mobile station.

Here, the mobile body may be a mobile terminal such as a smartphone or a mobile phone. The mobile body may be a mobile body that moves on the land (ground in a narrow sense) (for example, a vehicle such as an automobile, a motorcycle, a bus, a truck, a motorbike, a train, or a linear motor car), or a mobile body (for example, subway) that moves under the ground (for example, through a tunnel). The mobile body may be a mobile body that moves on the water (for example, a ship such as a passenger ship, a cargo ship, or a hovercraft), or a mobile body that moves underwater (for example, a submersible ship such as a submersible boat, a submarine, or an unmanned submarine). The mobile body may be a mobile body that moves in the atmosphere (for example, an aircraft such as an airplane, an airship, or a drone).

The base station 20 may be a terrestrial base station (terrestrial station) installed on the ground. The base station 20 may be a base station disposed on a structure on the ground, or may be a base station installed in a mobile body moving on the ground. The base station 20 may be an antenna installed in a structure such as a building and a signal processing apparatus connected to the antenna. The base station 20 may be a structure or a mobile body itself. The "ground" represents not only a land (ground in a narrow sense) but also a terrestrial location in a broad sense including underground, above-water, and underwater. The base station 20 is not limited to a terrestrial base station. In a case where the communication system 1 is a satellite communication system, the base station 20 may be an aircraft station. From the perspective of a satellite station, an aircraft station located on the earth is a terrestrial station.

The base station 20 is not limited to a terrestrial station. The base station 20 may be a non-terrestrial base station (non-terrestrial station) capable of floating in the air or space. For example, the base station 20 may be an aircraft station or a satellite station.

The satellite station is a satellite station capable of floating outside the atmosphere. The satellite station may be an apparatus mounted on a space mobile body such as an artificial satellite, or may be a space mobile body itself. A space mobile body is a mobile body that moves outside the atmosphere. Examples of the space mobile body include artificial bodies such as artificial satellites, spacecraft, space stations, or probes. The satellite serving as the satellite station may be any of a low earth orbiting (LEO) satellite, a medium earth orbiting (MEO) satellite, a geostationary earth orbiting (GEO) satellite, or a highly elliptical orbiting (HEO) satellite. The satellite station may be an apparatus mounted on a low earth orbiting satellite, a medium earth orbiting satellite, a geostationary earth orbiting satellite, or a highly elliptical orbiting satellite.

The aircraft station is a wireless communication apparatus capable of floating in the atmosphere, such as an aircraft. The aircraft station may be an apparatus mounted on an aircraft or the like, or may be an aircraft itself. The aircraft conceptually includes not only heavy aircraft such as an airplane or a glider but also light aircraft such as a balloon or an airship. The aircraft conceptually includes not only a heavy aircraft or a light aircraft but also a rotorcraft such as a helicopter or an auto-gyro. The aircraft station or an aircraft equipped with an aircraft station may be an unmanned aerial vehicle such as a drone.

The unmanned aerial vehicle conceptually includes an unmanned aircraft system (UAS) and a tethered UAS. The unmanned aircraft conceptually includes also a Lighter-than-Air (LTA) unmanned aircraft system (UAS) and a Heavier-than-Air (HTA) unmanned aircraft system (UAS). The unmanned aircraft conceptually includes also High Altitude unmanned aircraft system (UAS) platforms (HAPs).

The coverage of the base station 20 may be relatively large such as a macro cell or relatively small such as a pico cell. The coverage of the base station 20 may be extremely small such as a femto cell. The base station 20 may have a beamforming function. In this case, the base station 20 may form a cell or a service area for each beam. The base station 20 may further include a pointforming function. Pointforming is a technique (power concentration technique) of concentrating power at a specific point using a phase difference of a near field. In this case, the base station 20 may form a cell or a service area for each point.

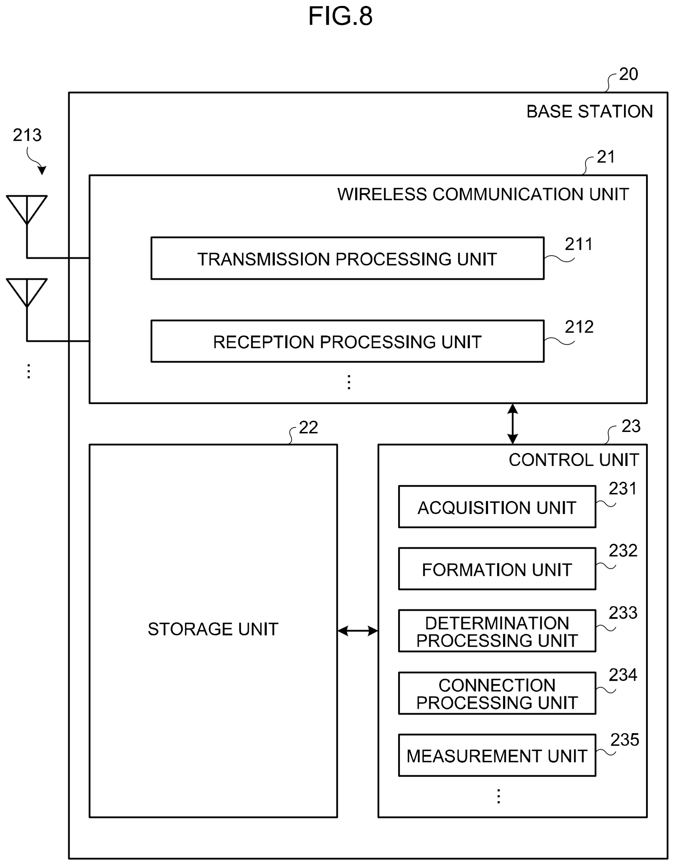

FIG. 8 is a diagram illustrating a configuration of the base station 20 according to the present embodiment. The base station 20 includes a wireless communication unit 21, a storage unit 22, and a control unit 23. The configuration illustrated in FIG. 8 is a functional configuration, and the hardware configuration may be different from this configuration. Furthermore, the functions of the base station 20 may be implemented in a distributed form in a plurality of physically separated configurations.

The wireless communication unit 21 is a signal processing unit for performing wireless communication with other wireless communication apparatuses (for example, the relay station 30, the terminal apparatus 40, or another base station 20). The wireless communication unit 21 is controlled by the control unit 23. The wireless communication unit 21 may support one or a plurality of radio access schemes. The wireless communication unit 21 may support at least one of NR, LTE, and 6G. The wireless communication unit 21 may support W-CDMA, cdma2000, and the like in addition to NR, LTE, and 6G. The wireless communication unit 21 may support an automatic retransmission technology such as Hybrid Automatic Repeat Request (HARQ).

The wireless communication unit 21 includes a transmission processing unit 211, a reception processing unit 212, and an antenna 213. The wireless communication unit 21 may include a plurality of the transmission processing units 211, a plurality of the reception processing units 212, and a plurality of the antennas 213. In a case where the wireless communication unit 21 supports a plurality of radio access schemes, individual portions of the wireless communication unit 21 may be configured separately for each of the radio access schemes. The transmission processing unit 211 and the reception processing unit 212 may be configured separately for LTE, NR, and 6G. The antenna 213 may include a plurality of antenna elements, for example, a plurality of patch antennas. The wireless communication unit 21 may have a beamforming function. For example, the wireless communication unit 21 may have a polarization beamforming function using vertically polarized waves (V-polarized waves) and horizontally polarized waves (H-polarized waves) (or may have a polarization beamforming function using dual polarization in polarization directions of 45 degrees and - 45 degrees with the vertical direction). The wireless communication unit 21 may further include a pointforming function.

The transmission processing unit 211 performs transmission processing of downlink control information and downlink data. The transmission processing unit 211 codes the downlink control information and the downlink data input from the control unit 23 by using a coding method such as block coding, convolutional coding, or turbo coding. The coder may perform coding using a polar code or a Low Density Parity Check (LDPC) code. The transmission processing unit 211 modulates the coded bits by a predetermined modulation scheme such as BPSK, QPSK, 16 QAM, 64 QAM, or 256 QAM. In this case, the signal points on the constellation do not necessarily have to be equidistant. The constellation may be a non uniform constellation (NUC). The transmission processing unit 211 multiplexes the modulation symbol of each of channels and the downlink reference signal and allocates the multiplexed signals on a predetermined resource element. Subsequently, the transmission processing unit 211 performs various types of signal processing on the multiplexed signal. For example, the transmission processing unit 211 performs processing such as conversion to the frequency domain using fast Fourier transform, addition of a guard interval (cyclic prefix), generation of a baseband digital signal, conversion to an analog signal, quadrature modulation, upconvert, removal of extra frequency components, and power amplification. The signal generated by the transmission processing unit 211 is transmitted from the antenna 213.

The reception processing unit 212 processes an uplink signal received via the antenna 213. For example, the reception processing unit 212 performs processing on the uplink signal, such as down-conversion, removal of unnecessary frequency components, amplification level control, quadrature demodulation, conversion to digital signal, removal of guard interval (cyclic prefix), and frequency domain signal extraction using fast Fourier transform. The reception processing unit 212 then demultiplexes an uplink channel such as a physical uplink shared channel (PUSCH) or a physical uplink control channel (PUCCH) and an uplink reference signal from the signal that has undergone these processing procedures. Subsequently, the reception processing unit 212 demodulates a received signal using a modulation scheme such as binary phase shift keying (BPSK) or quadrature phase shift keying (QPSK) for the modulation symbol of the uplink channel. The modulation scheme used in the demodulation may be 16 quadrature amplitude modulation (QAM), 64 QAM, or 256 QAM. In this case, the signal points on the constellation do not necessarily have to be equidistant. The constellation may be a non-uniform constellation (NUC). Subsequently, the reception processing unit 212 performs decoding processing on the coded bits of the demodulated uplink channel. The decoded uplink data and uplink control information are output to the control unit 23.

The antenna 213 is an antenna apparatus that performs mutual conversion of a current and a radio wave. The antenna 213 may include one antenna element, for example, one patch antenna. Furthermore, the antenna 213 may include a plurality of antenna elements (for example, a plurality of patch antennas). In a case where the antenna 213 includes a plurality of antenna elements, the wireless communication unit 21 may have a beamforming function. In this case, the wireless communication unit 21 may control the directivity of a radio signal using a plurality of antenna elements to generate a directional beam. In a case where the antenna 213 includes a plurality of antenna elements, the wireless communication unit 21 may have a pointforming function. At this time, the wireless communication unit 21 may be configured to perform cooperative control of a plurality of antenna elements to form a point-shaped cell.

The antenna 213 may be a dual polarized antenna. In a case where the antenna 213 is a dual polarized antenna, the wireless communication unit 21 may use, in radio signal transmission, vertically polarized waves (V-polarized waves) and horizontally polarized waves (H-polarized waves) (or dual polarized waves in polarization direction at 45 degrees and -45 degrees with the vertical direction). The wireless communication unit 21 may control directivity of a radio signal transmitted using vertically polarized waves and horizontally polarized waves (or dual polarization in polarization direction at 45 degrees and - 45 degrees with vertical direction). Furthermore, the wireless communication unit 21 may transmit and receive spatially multiplexed signals via a plurality of layers including a plurality of antenna elements.

The storage unit 22 is a readable/writable storage device such as DRAM, SRAM, flash memory, or a hard disk. The storage unit 22 functions as a storage means in the base station 20.

The control unit 23 is a controller that controls individual parts of the base station 20. The control unit 23 controls the wireless communication unit to perform wireless communication with another wireless communication apparatus (for example, the relay station 30, the terminal apparatus 40, or another base station 20). The control unit 23 may be implemented by a processor such as a CPU or an MPU. Specifically, the control unit 23 may be implemented by a processor executing various programs stored in a storage device inside the base station 20 using the RAM or the like as a work area. The control unit 23 may be implemented by an integrated circuit such as an ASIC or an FPGA. The control unit 23 may be implemented by a GPU. The CPU, MPU, ASIC, FPGA, and GPU can all be regarded as controllers. The control unit 23 may include a plurality of physically separated objects. For example, the control unit 23 may include a plurality of semiconductor chips.

The control unit 23 includes an acquisition unit 231, a formation unit 232, a determination processing unit 233, a connection processing unit 234, and a measurement unit 235. Individual blocks (the acquisition unit 231 to the measurement unit 235) constituting the control unit 23 are functional blocks individually indicating functions of the control unit 23. These functional blocks may be software blocks or hardware blocks. For example, each of the functional blocks described above may be one software module implemented by software (including a microprogram) or one circuit block on a semiconductor chip (die). Naturally, each of the functional blocks may be formed as one processor or one integrated circuit. Note that the control unit 23 may be configured in a functional unit different from the above-described functional block. The functional block may be configured by using any method.

In some embodiments, the base station 20 may be configured by a set of a plurality of physical or logical apparatuses. As an example, the base station 20 in the present embodiment may be classified into a plurality of apparatuses such as a Baseband Unit (BBU) and a Radio Unit (RU). The base station 20 may be construed as a set of the plurality of apparatuses. In addition, the base station may be either one or both of the BBU and the RU. The BBU and the RU may be connected to each other via a predetermined interface (for example, an enhanced Common Public Radio Interface (eCPRI)).

The RU may be referred to as a Remote Radio Unit (RRU) or a Radio DoT (RD). The RU may support a gNB Distributed Unit (gNB-DU) described below. The BBU may support a gNB Central Unit) (gNB-CU) described below. The RU may be an apparatus integrally formed with an antenna. An antenna of the base station 20, for example, an antenna integrally formed with an RU, may employ an Advanced Antenna System and support MIMO (for example, FD-MIMO) or beamforming. In addition, the antenna of the base station 20 may support pointforming. For example, the antenna of the base station 20 may include 64 transmitting antenna ports and 64 receiving antenna ports.

The antenna mounted on the RU may be an antenna panel including one or more antenna elements, and the RU may include one or more antenna panels. The RU may be equipped with two types of antenna panels: a horizontally polarized antenna panel and a vertically polarized antenna panel. The RU may be equipped with two types of antenna panels, that is, a right-handed circularly polarized antenna panel and a left-handed circularly polarized antenna panel, or an antenna panel with a polarization direction of 45 degrees with the vertical direction and an antenna panel with a polarization direction of -45 degrees with the vertical direction. A plurality of antennas having the plurality of polarization directions may be mounted on one antenna panel. The RU may form and control an independent beam for each antenna panel.

The plurality of base stations 20 may be connected to each other. One or the plurality of base stations 20 may be included in a Radio Access Network (RAN). That is, the base station 20 may be simply referred to as a RAN, a RAN node, an Access Network (AN), an AN node, or the like. RAN in LTE is sometimes referred to as Enhanced Universal Terrestrial RAN (EUTRAN). RAN in NR may be referred to as NGRAN. In addition, RAN in 6G may be referred to as 6GRAN. RAN in W-CDMA (UMTS) may be referred to as UTRAN.

The base station 20 in LTE may be referred to as Evolved Node B (eNodeB) or eNB. That is, EUTRAN includes one or a plurality of eNodeB (eNB). NR base stations 20 may be referred to as gNodeB or gNB. At this time, NGRAN contains one or a plurality of gNBs. A 6G base station may be referred to as a 6GNodeB, a 6gNodeB, a 6GNB, or a 6gNB. At this time, 6GRAN contains one or a plurality of 6GNBs. EUTRAN may include gNB (en-gNB) connected to the core network (EPC) in LTE communication systems (EPS). NGRAN may include an ng-eNB connected to the core network 5GC in a 5G communication system (5GS).

When the base station 20 is eNB, gNB, 6GNB or the like, the base station 20 may be referred to as 3GPP access. When the base station 20 is a radio access point, the base station 20 may be referred to as non-3GPP access. The base station 20 may be an optical link apparatus referred to as a Remote Radio Head (RRH). Furthermore, in a case where the base station 20 is a gNB, the base station 20 may be a combination of the gNB-CU and the gNB-DU described above, or may be any of the gNB-CU and the gNB-DU.

Here, in order to have a communication with the UE, the gNB-CU hosts a plurality of upper layers (for example, Radio Resource Control (RRC), Service Data Adaptation Protocol (SDAP), and Packet Data Convergence Protocol (PDCP)) in an access stratum. On the other hand, the gNB-DU hosts a plurality of lower layers (for example, Radio Link Control (RLC), Medium Access Control (MAC), and Physical Layer (PHY)) in an access stratum. That is, among messages/information to be described below, RRC signaling (semi-static notification) may be generated by the gNB-CU, while MAC CE and DCI (dynamic notification) may be generated by the gNB-DU. Alternatively, among the RRC configurations (semi-static notifications), some configurations such as IE: cellGroupConfig may be generated by the gNB-DU, while the remaining configurations may be generated by the gNB-CU, for example. These configurations may be transmitted and received via an F1 interface described below.

The base station 20 may be configured to be able to communicate with another base station. When the plurality of base stations 20 are eNBs or a combination of an eNB and an en-gNB, these base stations 20 may be connected by an X2 interface. When the plurality of base stations 20 are gNBs or a combination of a gn-eNB and a gNB, these base stations 20 may be connected by an Xn interface. When the plurality of base stations 20 are a combination of a gNB-CU and a gNB-DU, these base stations 20 may be interconnected by the F1 interface described above. A message/information (for example, RRC signaling, MAC Control Element (MAC CE), Downlink Control Information (DCI), or the like) to be described below may be transmitted among the plurality of base stations 20 via an interface such as an X2 interface, an Xn interface, an F1 interface, for example.

The cell provided by the base station 20 may be referred to as a serving cell. The serving cell conceptually includes a primary cell (PCell) and a secondary cell (SCell). When dual connectivity is provided to the terminal apparatus 40, the PCell provided by a Master Node (MN) and zero or one or more SCells may be referred to as a Master Cell Group. Examples of dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity, etc. Examples of the dual connectivity further include NR-6G Dual Connectivity and 6G-NR Dual Connectivity.

The serving cell may include a Primary Secondary Cell or Primary SCG Cell (PSCell). In a case where dual connectivity is provided to the terminal apparatus 40, the PSCell and the zero or one or more SCells provided by a secondary node (SN) may be referred to as Secondary Cell Group (SCG). Unless specially configured (for example, PUCCH on SCell), a physical uplink control channel (PUCCH) is transmitted by the PCell and the PSCell, but is not transmitted by the SCell. The radio link failure is also detected by the PCell and the PSCell, but is not detected by the SCell (need not be detected). In this manner, since the PCell and the PSCell have a special role in the serving cell, these cells are also referred to as Special Cells (SpCells).

One cell may be associated with one downlink component carrier and one uplink component carrier. The system bandwidth corresponding to one cell may be divided into a plurality of bandwidth parts (BWPs). In this case, one or a plurality of BWPs may be configured for the terminal apparatus 40, and one BWP may be used for the terminal apparatus 40 as an active BWP. Radio resources (for example, a frequency band, a numerology (subcarrier spacing), and a slot format (slot configuration)) usable by the terminal apparatus 40 may be different for each cell, each component carrier, or each BWP.

### <2-3. Configuration of relay station>

The relay station 30 is a wireless communication apparatus serving as a repeater of the base station 20. The relay station 30 is a type of base station. The relay station 30 is a type of information processing apparatus. The relay station 30 can also be referred to as a relay base station. For example, the relay station 30 may be an apparatus referred to as a repeater (for example, RF Repeater, Smart Repeater, or Intelligent Surface). The relay station 30 is a wireless communication apparatus that performs wireless communication with other wireless communication apparatuses (for example, the base station 20, another relay station 30, or the terminal apparatus 40).

The relay station 30 may be capable of performing NOMA communication with the terminal apparatus 40. The relay station 30 relays communication between the base station 20 and the terminal apparatus 40. The relay station 30 may be capable of performing wireless communication with another relay station 30 and the base station 20. The relay station 30 may be a terrestrial station apparatus or a non-terrestrial station apparatus. The relay station 30 constitutes a radio access network RAN together with the base station 20.

The relay station 30 may be a fixed apparatus, a movable apparatus, or a floating apparatus. The size of the coverage of the relay station 30 is not limited to a specific size. The cell covered by the relay station 30 may be a macro cell, a micro cell, or a small cell.

The relay station 30 may be mounted on any type of apparatus as long as the function of relay is satisfied. The relay station 30 may be mounted on a terminal apparatus such as a smartphone, may be mounted on an automobile, a train or a human-powered vehicle, may be mounted on a balloon, an airplane, or a drone, or on a home appliance such as a television, a game machine, an air conditioner, a refrigerator, or a lighting fixture, etc.

The configuration of the relay station 30 may be similar to the configuration of the base station 20 described above. Similarly to the base station 20 described above, the relay station 30 may be an apparatus installed on a mobile body, or may be a mobile body itself. Here, the mobile body may be a mobile terminal such as a smartphone or a mobile phone, as described above. The mobile body may be a mobile body that moves on land (on the ground in a narrow sense) or may be a mobile body that moves in the ground. The mobile body may be a mobile body that moves over water or may be a mobile body that moves under water. The mobile body may be a mobile body that moves inside the atmosphere or may be a mobile body that moves outside the atmosphere. The relay station 30 may be a terrestrial station apparatus or a non-terrestrial station apparatus. The relay station 30 may be an aircraft station or a satellite station.

The coverage of the relay station 30 may be large such as a macro cell or small such as a pico cell, similarly to the base station 20. The coverage of the relay station 30 may be extremely small such as a femto cell. The relay station 30 may have a beamforming function. In this case, the relay station 30 may form a cell or a service area for each beam. The relay station 30 may further include a pointforming function. In this case, the relay station 30 may form a cell or a service area for each point.

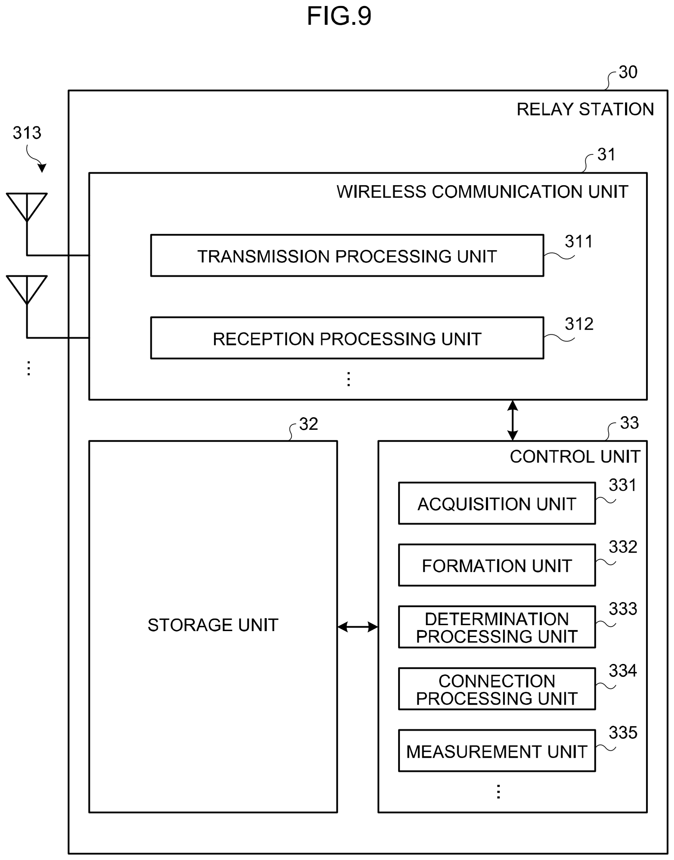

FIG. 9 is a diagram illustrating a configuration of the relay station 30 according to the present embodiment. The relay station 30 includes a wireless communication unit 31, a storage unit 32, and a control unit 33. The configuration illustrated in FIG. 9 is a functional configuration, and the hardware configuration may be different from this configuration. Furthermore, the functions of the relay station 30 may be implemented in a distributed manner in a plurality of physically separated configurations.

The wireless communication unit 31 is a signal processing unit for performing wireless communication with other wireless communication apparatuses (for example, the base station 20, the terminal apparatus 40, or another relay station 30). The wireless communication unit 31 may support one or a plurality of radio access schemes. The wireless communication unit 31 may support at least one of NR, LTE, and 6G. The wireless communication unit 31 may support W-CDMA, cdma3000, and the like in addition to NR, LTE, and 6G.

The wireless communication unit 31 includes a transmission processing unit 311, a reception processing unit 312, and an antenna 313. The wireless communication unit 31 may include a plurality of the transmission processing units 311, a plurality of the reception processing units 312, and a plurality of the antennas 313. In a case where the wireless communication unit 31 supports a plurality of radio access schemes, individual portions of the wireless communication unit 31 may be configured separately for each of the radio access schemes. The transmission processing unit 311 and the reception processing unit 312 may be configured separately for LTE, NR, and 6G. The configurations of the transmission processing unit 311, the reception processing unit 312, and the antenna 313 may be similar to the configurations of the transmission processing unit 211, the reception processing unit 212, and the antenna 213 of the above-described base station 20, respectively. The wireless communication unit 31 may have a beamforming function similarly to the wireless communication unit 21 of the base station 20. The wireless communication unit 31 may have a pointforming function similarly to the wireless communication unit 21 of the base station 20.

The storage unit 32 is a readable/writable storage device such as DRAM, SRAM, flash memory, or a hard disk. The storage unit 32 functions as a storage means in the relay station 30. The configuration and function of the storage unit 32 may be similar to the configuration and function of the storage unit 22 of the base station 20 described above.

The control unit 33 is a controller that controls individual parts of the relay station 30. The control unit 33 may be implemented by a processor such as a CPU or an MPU. Specifically, the control unit 33 is implemented by the processor executing various programs stored in the storage device inside the relay station 30 using RAM or the like as a work area. The control unit 33 may be implemented by an integrated circuit such as an ASIC or an FPGA. The CPU, MPU, ASIC, and FPGA can all be regarded as controllers. The control unit 33 may be implemented by a GPU. The CPU, MPU, ASIC, FPGA, and GPU can all be regarded as controllers. The control unit 33 may include a plurality of physically separated objects. For example, the control unit 33 may include a plurality of semiconductor chips. The configuration and function of the control unit 33 may be similar to the configuration and function of the control unit 23 of the base station 20 described above.

The control unit 33 includes an acquisition unit 331, a formation unit 332, a determination processing unit 333, a connection processing unit 334, and a measurement unit 335. Individual blocks (the acquisition unit 331 to the measurement unit 335) constituting the control unit 33 are functional blocks individually indicating functions of the control unit 33. These functional blocks may be software blocks or hardware blocks. For example, each of the functional blocks described above may be one software module implemented by software (including a microprogram) or one circuit block on a semiconductor chip (die). Naturally, each of the functional blocks may be formed as one processor or one integrated circuit. Note that the control unit 33 may be configured in a functional unit different from the above-described functional block. The functional block may be configured by using any method.

Note that the relay station 30 may be an IAB relay node. The relay station 30 operates as IAB-mobile termination (IAB-MT) for an IAB donor node that provides backhaul, and operates as an IAB-distributed unit (IAB-DU) for the terminal apparatus 40 that provides access. The IAB donor node may be the base station 20, for example, and operates as an IAB-Central Unit (IAB-CU).

### <2-4. Configuration of terminal apparatus>

The terminal apparatus 40 is a wireless communication apparatus that performs wireless communication with another wireless communication apparatus (for example, the base station 20, the relay station 30, or another terminal apparatus 40, etc.). The terminal apparatus 40 can be implemented by employing any form of information processing apparatus (computer). For example, the terminal apparatus 40 may be a mobile terminal such as a mobile phone, a smart device (smartphone or tablet), a personal digital assistant (PDA), or a laptop PC. The terminal apparatus 40 may be an imaging apparatus (for example, a camcorder) having a communication function. The terminal apparatus 40 may be a motorcycle, a moving relay vehicle, or the like, equipped with a communication apparatus such as the field pickup unit (FPU). The terminal apparatus 40 may be a Machine to Machine (M2M) device or an Internet of Things (IoT) device. The terminal apparatus 40 may be a wearable device such as a smart watch.

The terminal apparatus 40 may be an xR device such as an augmented reality (AR) device, a virtual reality (VR) device, or a mixed reality (MR) device. At this time, the xR device may be an eyeglass-type device such as AR glasses or MR glasses, or may be a head-mounted device such as a VR head-mounted display. In a case where the terminal apparatus 40 is an xR device, the terminal apparatus 40 may be a standalone device including only a portion worn on the user (for example, the eyeglass portion). Furthermore, the terminal apparatus 40 may be a terminal-linked device including the portion worn on the user (for example, the eyeglass portion) and a terminal portion (for example, a smart device) linked with the portion worn on the user.

The terminal apparatus 40 may be capable of performing NOMA communication with the base station 20. The terminal apparatus 40 may be able to use an automatic retransmission technology such as HARQ when communicating with the base station 20. The terminal apparatus 40 may be capable of sidelink communication with another terminal apparatus 40. The terminal apparatus 40 may be capable of using an automatic retransmission technology such as HARQ when performing sidelink communication. The terminal apparatus 40 may be able to perform NOMA communication when performing sidelink communication with another terminal apparatus 40. The terminal apparatus 40 may be able to perform LPWA communication with another wireless communication apparatus such as the base station 20. The wireless communication used by the terminal apparatus 40 may be wireless communication using millimeter waves. The wireless communication (including sidelink communication) used by the terminal apparatus 40 may be wireless communication using radio waves or wireless communication using infrared rays or visible light, namely, optical wireless communication.

The terminal apparatus 40 may be a movable wireless communication apparatus, that is, a mobile apparatus. Furthermore, the terminal apparatus 40 may be a wireless communication apparatus installed on a mobile body, or may be the mobile body itself. The terminal apparatus 40 may be a vehicle that moves on a road, such as an automobile, a bus, a truck, or a motorbike, or may be a wireless communication apparatus mounted on the vehicle. The mobile body may be a mobile terminal, or may be a mobile body that moves on land (on the ground in a narrow sense), in the ground, on water, or under water. The mobile body may be a mobile body that moves inside the atmosphere, such as an aircraft, airship, balloon, or a helicopter, or may be a mobile body that moves outside the atmosphere, such as an artificial satellite. The mobile body may be an unmanned aerial vehicle (UAV) such as a drone. The terminal apparatus 40 may be a wireless communication apparatus mounted on a mobile body.

The terminal apparatus 40 may be capable of performing communication while being simultaneously connected to a plurality of base stations 20 or a plurality of cells. For example, when one base station 20 supports a communication area via a plurality of cells (for example, pCell and sCell), it is possible to combine the plurality of cells and communicate between the base station 20 and the terminal apparatus 40 by using a carrier aggregation (CA) technology, a dual connectivity (DC) technology, or a multi-connectivity (MC) technology. Alternatively, the terminal apparatus 40 and the plurality of base stations 20 can communicate with each other by a Coordinated MultiPoint Transmission and Reception (CoMP) technology via cells of different base stations 20.

The terminal apparatus 40 may be a relay terminal that relays communication to a remote terminal.

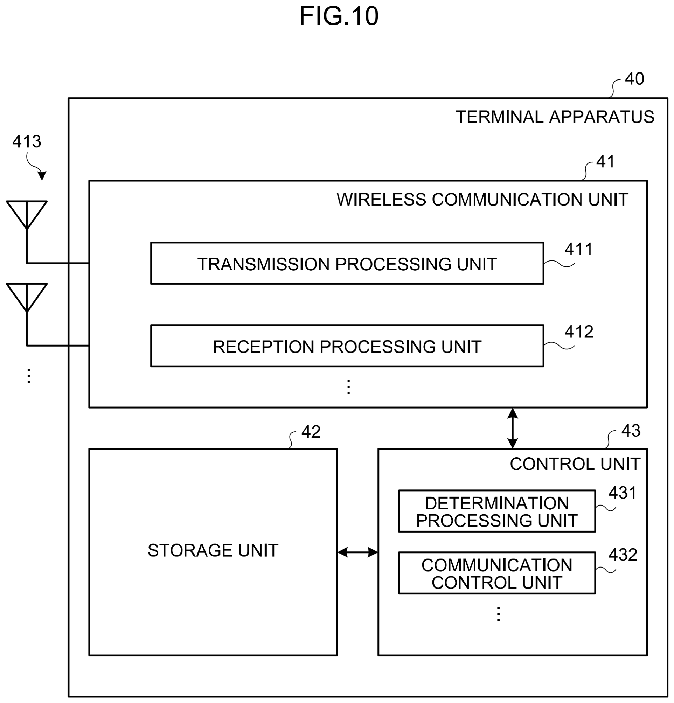

FIG. 10 is a diagram illustrating a configuration of the terminal apparatus 40 according to the present embodiment. The terminal apparatus 40 includes a wireless communication unit 41, a storage unit 42, and a control unit 33. The configuration illustrated in FIG. 10 is a functional configuration, and the hardware configuration may be different from this configuration. Furthermore, the functions of the terminal apparatus 40 may be implemented in a distributed manner in a plurality of physically separated configurations.

The wireless communication unit 41 is a signal processing unit for performing wireless communication with other wireless communication apparatuses (for example, the base station 20, the relay station 30, and another terminal apparatus 40). The wireless communication unit 41 is controlled by the control unit 43. The wireless communication unit 41 may support one or a plurality of radio access schemes. The wireless communication unit 41 may support at least one of NR, LTE, and 6G. The wireless communication unit 41 may support W-CDMA, cdma2000, and the like in addition to NR, LTE, and 6G. The wireless communication unit 41 may support an automatic retransmission technology such as Hybrid Automatic Repeat Request (HARQ).

The wireless communication unit 41 includes a transmission processing unit 411, a reception processing unit 412, and an antenna 413. The wireless communication unit 41 may include a plurality of the transmission processing units 411, a plurality of the reception processing units 412, and a plurality of the antennas 413. In a case where the wireless communication unit 41 supports a plurality of radio access schemes, individual portions of the wireless communication unit 41 may be configured separately for each of the radio access schemes. The transmission processing unit 411 and the reception processing unit 412 may be configured separately for LTE, NR, and 6G. The antenna 413 may include a plurality of antenna elements, for example, a plurality of patch antennas. The wireless communication unit 41 may have a beamforming function. For example, the wireless communication unit 41 may have a polarization beamforming function using vertically polarized waves (V-polarized waves) and horizontally polarized waves (H-polarized waves) (or may have a polarization beamforming function using dual polarization in polarization directions of 45 degrees and - 45 degrees with the vertical direction). The wireless communication unit 41 may further include a pointforming function.

The storage unit 42 is a readable/writable storage device such as DRAM, SRAM, flash memory, or a hard disk. The storage unit 42 functions as a storage means in the terminal apparatus 40.

The control unit 43 is a controller that controls individual parts of the terminal apparatus 40. The control unit 43 controls the wireless communication unit to perform wireless communication with another wireless communication apparatus (for example, the base station 20, the relay station 30, or another terminal apparatus 40). The control unit 43 may be implemented by a processor such as a CPU or an MPU. Specifically, the control unit 43 is implemented by the processor executing various programs stored in the storage device inside the terminal apparatus 40 using RAM or the like as a work area. The control unit 43 may be implemented by an integrated circuit such as an ASIC or an FPGA. The CPU, MPU, ASIC, and FPGA can all be regarded as controllers. The control unit 43 may be implemented by a GPU. The CPU, MPU, ASIC, FPGA, and GPU can all be regarded as controllers. The control unit 43 may include a plurality of physically separated objects. For example, the control unit 43 may include a plurality of semiconductor chips.

The control unit 43 includes a determination processing unit 431 and a communication control unit 432. Individual blocks (the determination processing unit 431 to the communication control unit 432) constituting the control unit 43 are functional blocks individually indicating functions of the control unit 43. These functional blocks may be software blocks or hardware blocks. For example, each of the functional blocks described above may be one software module implemented by software (including a microprogram) or one circuit block on a semiconductor chip (die). Naturally, each of the functional blocks may be formed as one processor or one integrated circuit. Note that the control unit 43 may be configured in a functional unit different from the above-described functional block. The functional block may be configured by using any method.

### <<3. Basic operation of communication system>>

The configuration of the communication system 1 has been described above. Before describing the operation of the communication system 1 to solve the problem of the present embodiment, the basic operation of the communication system 1 will be described.

In the following description, the base station 20 can be rephrased as a gateway. In addition, the base station 20 may be read as the relay station 30.

### <3-1. Initial connection processing>

First, initial connection processing will be described.

The initial connection processing is processing for transitioning the wireless connection state of the terminal apparatus 40 from the unconnected state to the connected state. The unconnected state includes RRC_IDLE and RRC_INACTIVE, for example. RRC_IDLE is an idle state where the terminal apparatus is not connected to any cell, and is also referred to as an Idle mode. In addition, RRC_INACTIVE is a radio connection state indicating an inactive state newly prescribed in NR, and is also referred to as an inactive mode. In RRC_INACTIVE, RRC connection itself is not established between the terminal apparatus 40 and the base station, but the terminal apparatus 40 and the base station may individually keep a state of holding some UE contexts. The terminal apparatus 40 and the base station may use the held UE context in order to speed up the repeated transitions of the terminal apparatus 40 to the Connected state. The unconnected state may include a Lightning mode. Examples of the connection state include RRC_CONNECTED. RRC_CONNECTED is a connection state where a terminal apparatus has established a connection with a specific cell (for example, Primary Cell), and is also referred to as a CONNECTED mode.

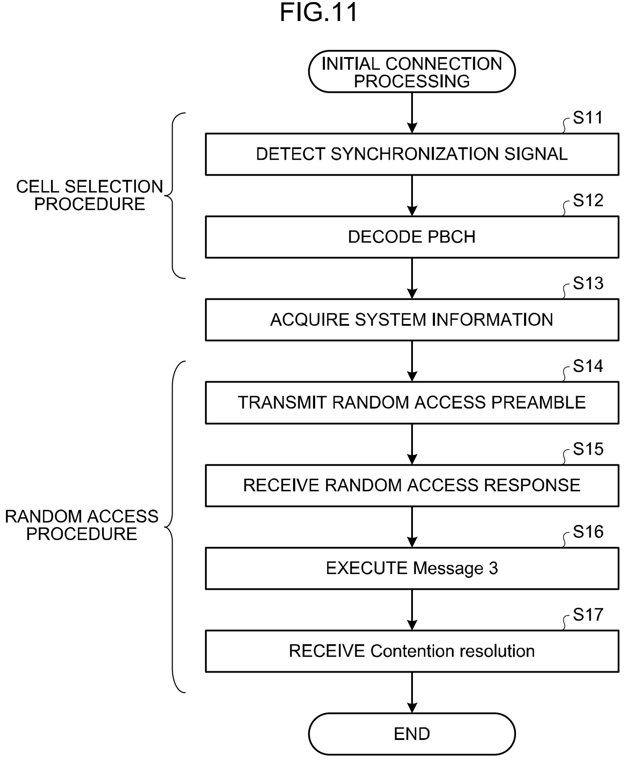

FIG. 11 is a flowchart illustrating an example of the initial connection processing. The initial connection processing will be described below with reference to FIG. 11. The initial connection processing described below is executed when the terminal apparatus 40 is powered on, for example.

First, the terminal apparatus 40 in the unconnected state performs a cell selection procedure (cell search). The cell selection procedure (cell search) is a procedure for User Equipment (UE) to detect physical cell ID (PCI) of a cell and obtain time and frequency synchronization. The cell search of the present embodiment includes steps of detecting a synchronization signal and decoding a Physical Broadcast Channel (PBCH). The terminal apparatus 40 detects a synchronization signal of a cell (Step S11).

The terminal apparatus 40 performs synchronization in the downlink with the cell based on the detected synchronization signal. Subsequently, after establishment of the downlink synchronization, the terminal apparatus 40 attempts to decode the PBCH and acquires a Master Information Block (MIB) being a part of system information (Step S12).

The system information is information of announcing a setting in a cell from which the system information is transmitted. The system information may be information common to all terminal apparatuses (including the terminal apparatus 40) belonging to the cell. The system information may be information specific to the cell. The system information includes, for example, information regarding access to a cell, information regarding cell selection, and information regarding other RATs and other systems. The system information includes an MIB and a System Information Block (SIB). The MIB is information necessary for receiving the SIB and the like, and is information of a fixed payload size announced by PBCH. The MIB includes a part of a system frame number, information of at least a SIB1 and Msg. 2/4 for initial connection and subcarrier spacing of paging and broadcast SI messages, subcarrier offset information, DMRS Type A position information, PDCCH configuration at least for SIB1, cell prohibition (cell barred) information, and intra-frequency reselection information. The SIB is system information other than MIB and is announced by the PDSCH.

The system information can be classified into first system information, second system information, and third system information. The first system information and the second system information include information regarding access to a cell, information regarding acquisition of other system information, and information regarding cell selection. Information included in the MIB is first system information. The information included in the SIB1, among the SIB, is the second system information (for example, Remaining Minimum SI). The remaining system information is the third system information (for example, Other SI).

Also in NR, system information is announced from the NR cell. The physical channel carrying the system information may be transmitted in a slot or a mini-slot. The mini-slot is defined by the number of symbols smaller than the number of symbols of the slot. Since the physical channel carrying the system information is transmitted in the mini-slot, it is possible to reduce the time required for the beam sweep, leading to reduction of the overhead. In NR, the first system information is transmitted on the NR-PBCH, and the second system information is transmitted on a physical channel different from the NR-PBCH.

The terminal apparatus 40 acquires the second system information based on the MIB (namely, the first system information) (Step S13). As described above, the second system information includes the SIB1 and the SIB2.

The SIB1 includes cell access control information and scheduling information regarding system information other than the SIB1. In the case of NR, the SIB1 includes information regarding cell selection (for example, cellSelectionInfo), information regarding cell access (for example, cellAccessRelatedInfo), information regarding connection establishment failure control (for example, connEstFailureControl), scheduling information regarding system information other than the SIB1 (for example, si-SchedulingInfo), and serving cell setting. The serving cell configuration includes a cell-specific parameter, and includes a downlink configuration, an uplink configuration, and TDD configuration information. The uplink setting includes RACH setting and the like. Furthermore, in the case of LTE, the SIB1 includes cell access information, cell selection information, maximum uplink transmission power information, TDD configuration information, a period of system information, system information mapping information, and a system information (SI) window length.

In the case of NR, the SIB2 includes cell reselection information (for example, cellReselectionInfoCommon) and cell reselection serving frequency information (for example, cellReselectionServingFreqInfo). In the case of LTE, the SIB2 includes connection prohibition information, radio resource configuration information (radioResourceConfigCommon) common to cells, and uplink carrier information. The radio resource configuration information common to cells includes configuration information regarding a Physical Random Access Channel (PRACH) and a Random Access Channel (RACH) common to cells.

When the terminal apparatus 40 failed in acquisition of system information necessary for link establishment, the terminal apparatus 40 judges that the access to the cell is prohibited. For example, when acquisition of the first system information failed, the terminal apparatus 40 judges that access to the cell is prohibited. In this case, the terminal apparatus 40 ends the initial connection processing.

When the system information has been successfully acquired, the terminal apparatus 40 executes a random access procedure based on the first system information and/or the second system information (Steps S14 to S17). The random access procedure may be referred to as a Random Access Channel procedure (RACH procedure) or a RA procedure.

The random access procedure includes the steps of transmitting a random access preamble (Step S14), receiving a random access response (Step S15), transmitting Message 3 (Step S16), and receiving contention resolution (Step S17).

First, the terminal apparatus 40 selects a predetermined Physical Random Access Channel (PRACH) preamble and transmits the selected preamble to the base station 20 (Step S14). Next, the terminal apparatus 40 receives a Physical Downlink Shared Channel (PDSCH) including a random access response corresponding to the PRACH preamble (Step S15). Next, the terminal apparatus 40 transmits the PUSCH including Message 3 using the resource scheduled by the random access response grant included in the random access response (Step S16). Finally, the terminal apparatus 40 receives the PDSCH containing a contention resolution corresponding to the PUSCH (Step S17).

The Message 3 includes a Radio Resource Control (RRC) message of an RRC connection request. The contention resolution includes an RRC message for RRC connection setup. When having received the RRC message of the RRC connection setup, the terminal apparatus 40 performs an RRC connection operation and transitions from an RRC idle state to an RRC connected state. After having transitioned to the RRC connected state, the terminal apparatus 40 transmits an RRC message indicating RRC connection setup completion to the base station 20. This series of operations allows the terminal apparatus 40 to be connected to the base station 20.

The random access preamble may be denoted as Message 1, the random access response may be referred to as Message 2, the contention resolution may be referred to as Message 4, and the RRC connection setup completion message may be denoted as Message 5.

After all the steps of the random access procedure are completed, the terminal apparatus 40 can transition to a state connected to the cell (connected state).

Note that the random access procedure in FIG. 11 may be referred to as a 4-Step random access procedure (4-Step RACH procedure). On the other hand, a random access procedure in which the terminal apparatus 40 also transmits Message 3 together with the transmission of the random access preamble, and the base station 20 transmits a random access response and contention resolution as a response to the received message may be referred to as a 2-Step random access procedure (2-Step RACH procedure).

### <3-2. Random access procedure>

Next, the random access procedure will be described in detail.

The random access procedure is performed for the purpose of "RRC connection setup" from the idle state to the connected state (or the inactive state), "request for state transition" from the inactive state to the connected state, and the like. The random access procedure is also used for the purpose of "scheduling request" for making a resource request for uplink data transmission and "Timing Advance adjustment" of adjusting uplink synchronization. In addition, the random access procedure is performed in cases such as "on-demand SI request" of requesting system information that has not been transmitted, "beam recovery" of recovering an interrupted beam connection, and "handover" of switching connected cells.

The "RRC connection setup" is an operation executed when the terminal apparatus 40 is connected to the base station 20 in association with generation of traffic or the like. Specifically, the operation is an operation of passing information regarding connection (for example, UE context) from the base station 20 to the terminal apparatus 40. The UE context is managed by predetermined communication apparatus identification information (for example, C-RNTI) instructed from the base station 20. When this operation is finished, the terminal apparatus 40 performs state transition from the idle state to the inactive state or from the idle state to the connected state.

The "request for state transition" is an operation in which the terminal apparatus 40 requests state transition from the inactive state to the connected state in association with generation of traffic or the like. Having transitioned to the connected state, the terminal apparatus 40 can transmit and receive unicast data to and from the base station 20.

The "scheduling request" is an operation in which the terminal apparatus 40 makes a resource request for uplink data transmission in association with generation of traffic or the like. After normal reception of the scheduling request, the base station 20 assigns a resource of the PUSCH to the communication apparatus. The scheduling request is also performed by the PUCCH.

The "Timing Advance adjustment" is an operation for adjusting an error between downlink and uplink frames caused by a propagation delay. The terminal apparatus 40 transmits a Physical Random Access Channel (PRACH) at the adjusted timing to the downlink frame. This makes it possible for the base station 20 to recognize the propagation delay with the terminal apparatus 40 and instruct the value of the Timing Advance to the terminal apparatus 40 by Message 2 or the like.

The "on-demand SI request" is an operation of requesting the base station 20 to transmit system information when the terminal apparatus 40 needs the system information which is not transmitted for the purpose of overhead of the system information or the like.

The "beam recovery" is an operation of requesting recovery when, after establishment of the beam, communication quality has deteriorated due to the movement of the terminal apparatus 40 or interruption of a communication path by another object. Having received this request, the base station 20 attempts connection to the terminal apparatus 40 using different beams.

The "handover" is an operation of switching connection from a cell (serving cell) to which the terminal apparatus 40 is connected to a cell (neighbor cell) in the neighbor of the cell due to a change in a radio wave environment such as movement of the terminal apparatus 40. Having received the handover command from the base station 20, the terminal apparatus 40 makes a connection request to the neighbor cell designated by the handover command.

The random access procedure includes a contention based random access procedure and a non-contention based random access procedure.

The random access procedure described below is a random access procedure assuming that the RAT supported by the communication system 1 is LTE. However, the random access procedure described below is also applicable to a case where the RAT supported by the communication system 1 is a technology other than LTE.

### <3-2-1. Contention based random access procedure>

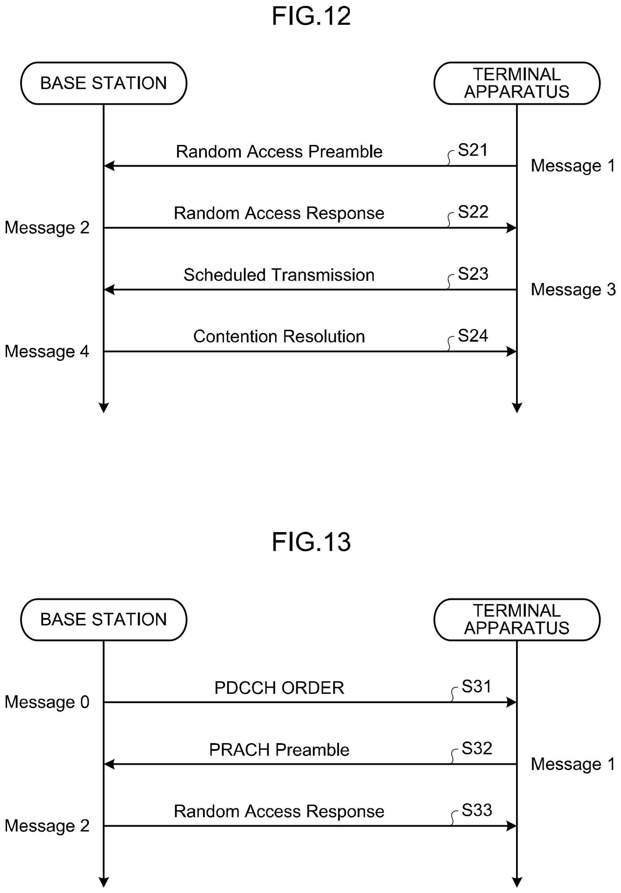

First, the contention based random access procedure will be described. The contention based random access procedure is a random access procedure performed on the initiative of the terminal apparatus 40. FIG. 12 is a diagram illustrating a contention based random access procedure. As illustrated in FIG. 12, the contention based random access procedure is a 4-Step procedure starting from transmission of the random access preamble from the terminal apparatus 40. The contention based random access procedure includes the steps of transmitting a random access preamble (Message 1), receiving a random access response (Message 2), transmitting a message (Message 3), and receiving a message (Message 4) for contention resolution.

First, the terminal apparatus 40 randomly selects a preamble sequence to be used from a plurality of predetermined preamble sequences. Subsequently, the terminal apparatus 40 transmits a message (Message 1: Random Access Preamble) including the selected preamble sequence to the base station 20 being a connection destination (Step S21). The random access preamble is transmitted on the PRACH.

Having received the random access preamble, the base station 20 transmits a random access response (Message 2), a replay to the random access preamble, to the terminal apparatus 40. This random access response is transmitted using the PDSCH, for example. The terminal apparatus 40 receives the random access response (Message 2) transmitted from the base station 20 (Step S22). The random access response includes one or a plurality of random access preambles that have been successfully received by the base station 20 and an uplink (UL) resource (hereinafter, referred to as an uplink grant) corresponding to the random access preamble. The random access response includes a Temporary Cell Radio Network Temporary Identifier (TC-RNTI) which is an identifier unique to the terminal apparatus 40 temporarily assigned to the terminal apparatus 40 by the base station 20.

Having receiving the random access response from the base station 20, the terminal apparatus 40 discerns whether the random access preamble transmitted in Step S21 is included in the reception information. In a case where the random access preamble is included, the terminal apparatus 40 extracts the uplink grant corresponding to the random access preamble transmitted in Step S21 from among the uplink grants included in the random access response. Subsequently, the terminal apparatus 40 transmits a UL message (Message 3: Scheduled Transmission) using the resource scheduled by the extracted uplink grant (Step S23). The transmission of the message (Message 3) is performed using the PUSCH. The message (Message 3) includes an RRC message for a radio resource control (RRC) connection request. The message (Message 3) further includes an identifier of the terminal apparatus 40. The message (Message 3) may be denoted as "Msg3".

In the contention based random access procedure, a random access preamble randomly selected by the terminal apparatus 40 is used for the procedure. Therefore, there may be a case where the terminal apparatus 40 transmits the random access preamble while another terminal apparatus 40 simultaneously transmits the same random access preamble to the base station 20. Therefore, by receiving the identifier transmitted by the terminal apparatus 40 in Step S23, the base station 20 recognizes a location where the preamble contention has occurred between the terminal apparatuses to achieve contention resolution. The base station 20 transmits contention resolution message (Message 4) to the terminal apparatus 40 selected by the contention resolution. The contention resolution message (Message 4) includes the identifier transmitted by the terminal apparatus 40 in Step S23. The contention resolution message (Message 4) also includes an RRC message of RRC connection setup. The terminal apparatus 40 receives the contention resolution message (Message 4) transmitted from the base station 20 (Step S24).

The terminal apparatus 40 compares the identifier transmitted in Step S23 with the identifier received in Step S24. When the identifiers do not match, the terminal apparatus 40 reattempts the random access procedure from Step S21. When the identifiers match, the terminal apparatus 40 performs the RRC connection operation and transitions from the idle state (RRC_IDLE) to the connected state (RRC_CONNECTED). The terminal apparatus 40 uses TC-RNTI acquired in Step S22 as a Cell Radio Network Temporary Identifier (C-RNTI) in subsequent communication. After having transitioned to the connected state, the terminal apparatus 40 transmits an RRC message indicating RRC connection setup completion to the base station 20. The RRC connection setup completion message is also referred to as Message 5. Through this series of operations, the terminal apparatus 40 is connected to the base station 20.

The contention based random access procedure illustrated in FIG. 12 is a 4-Step random access procedure (4-step RACH). However, the communication system 1 can also support a two-step random access procedure (2-step RACH) as the contention based random access procedure. For example, the terminal apparatus 40 also transmits the message (Message 3) described in Step S23 with the transmission of the random access preamble. Subsequently, the base station 20 transmits a random access response (Message 2) and a contention resolution (Message 4) as the responses. Since the random access procedure is completed in two steps, the terminal apparatus 40 can be quickly connected to the base station 20.

### <3-2-2. Non-contention based random access procedure>

Next, the non-contention based random access procedure will be described. The non-contention based random access procedure is a random access procedure performed on the initiative of the base station. FIG. 13 is a diagram illustrating a non-contention based random access procedure. The non-contention based random access procedure is a 3-step procedure starting from transmission of assignment of the random access preamble from the base station 20. The non-contention based random access procedure includes steps of receiving a random access preamble assignment (Message 0), transmitting a random access preamble (Message 1), and receiving a random access response (Message 2).

In the contention based random access procedure, the terminal apparatus 40 randomly selects the preamble sequence. However, in the non-contention based random access procedure, the base station 20 assigns an individual random access preamble to the terminal apparatus 40. The terminal apparatus 40 receives the random access preamble assignment (Message 0: RA Preamble Assignment) from the base station 20 (Step S31).

The terminal apparatus 40 performs random access to the base station 20 by using the random access preamble assigned in Step S31. That is, the terminal apparatus 40 transmits the assigned random access preamble (Message 1) to the base station 20 by the PRACH (Step S32).

The base station 20 receives the random access preamble (Message 1) from the terminal apparatus 40. Subsequently, the base station 20 transmits a random access response (Message 2) to the random access preamble to the terminal apparatus 40 (Step S33). The random access response includes, for example, information of the uplink grant corresponding to the received random access preamble. Having received the random access response (Message 2), the terminal apparatus 40 performs the RRC connection operation and transitions from the idle state (RRC_IDLE) to the connected state (RRC_CONNECTED).

In this manner, the base station 20 schedules the random access preamble in the non-contention based random access procedure, suppressing occurrence of the contention of the preambles.

### <3-3. Details of random access procedure in NR>

The above has described the random access procedure assuming that the RAT supported by the communication system 1 is LTE. The random access procedure described above is also applicable to a RAT other than LTE. Hereinafter, a random access procedure assuming that the RAT supported by the communication system 1 is NR will be described in detail. The following will specifically describe four steps regarding Message 1 to Message 4 illustrated in FIG. 12 or 13. The step of Message 1 corresponds to Step S21 illustrated in FIG. 12 and Step S32 illustrated in FIG. 13. The step of Message 2 corresponds to Step S22 illustrated in FIG. 12 and Step S33 illustrated in FIG. 13. The step of Message 3 corresponds to Step S23 illustrated in FIG. 12. The step of Message 4 corresponds to Step S24 illustrated in FIG. 12.

### NR random access preamble (Message 1)

In NR, PRACH is referred to as NR Physical Random Access Channel (NR-PRACH). The NR-PRACH is configured using a Zadoff-Chu sequence. In the NR, a plurality of preamble formats is prescribed as a format of the NR-PRACH. The preamble format is prescribed by a combination of parameters of PRACH, such as subcarrier spacing, a transmission bandwidth, a sequence length, the number of symbols used for transmission, the number of transmission repetitions, a cyclic prefix (CP) length, and a guard period. The type of the preamble sequence of the NR-PRACH is numbered. The number of the type of the preamble sequence is denoted as a preamble index.

In the NR, setting regarding the NR-PRACH is performed on the terminal apparatus 40 in the idle state by the system information. Furthermore, setting regarding the NR-PRACH is performed by dedicated RRC signaling on the terminal apparatus 40 in the connected state.

The terminal apparatus 40 transmits the NR-PRACH using a physical resource (NR-PRACH occasion) that can be transmitted by the NR-PRACH. The physical resource is indicated by a setting regarding the NR-PRACH. The terminal apparatus 40 selects one of the physical resources to transmit the NR-PRACH. Furthermore, when the terminal apparatus 40 is in the connected state, the terminal apparatus 40 transmits the NR-PRACH using the NR-PRACH resource. The NR-PRACH resource is a combination of an NR-PRACH preamble and physical resources thereof. The base station 20 can instruct the NR-PRACH resource to the terminal apparatus 40.

Note that the NR-PRACH is also transmitted even when the random access procedure has failed. When retransmitting the NR-PRACH, the terminal apparatus 40 suspends transmission of NR-PRACH for a suspension period calculated from a backoff value (back-off indicator, BI). The backoff value may vary depending on the terminal category of the terminal apparatus 40 and the priority of the generated traffic. At that time, notification of the backoff value is provided in plurality, from which the terminal apparatus 40 selects a back-off value to be used according to the priority. Furthermore, when retransmitting the NR-PRACH, the terminal apparatus 40 increases the transmission power of the NR-PRACH compared to the initial transmission. This procedure is denoted as power ramping.

### NR random access response (Message 2)

The NR random access response is transmitted using NR Physical Downlink Shared Channel (NR-PDSCH). The NR-PDSCH including the random access response is scheduled by an NR physical downlink control channel (NR-PDCCH) in which a cyclic redundancy check (CRC) has been scrambled by an RA-RNTI. The NR-PDCCH is transmitted on the Control Resource Set (CORESET). The NR-PDCCH having the CRC scrambled by the RA-RNTI is placed in a Common Search Space (CSS) of a Type1-PDCCH CSS set. The value of the RA-RNTI (Random Access Radio Network Temporary Identifier) is determined based on the transmission resource of the NR-PRACH corresponding to the random access response. The transmission resources of the NR-PRACH are, for example, time resources (slots or subframes) and frequency resources (resource blocks). The NR-PDCCH may be placed in a search space associated with the NR-PRACH associated with the random access response. Specifically, the search space in which the NR-PDCCH is placed is set in association with the preamble of the NR-PRACH and/or the physical resource used for transmission of the NR-PRACH. The search space in which the NR-PDCCH is placed is set in association with the preamble index and/or the index of the physical resource. The NR-PDCCH includes NR-SS (NR Synchronization signal) and QCL (Quasi co-location).

The NR random access response is Medium Access Control (MAC) information. The NR random access response includes at least an uplink grant for transmitting the NR Message 3, a value of a Timing Advance used to adjust uplink frame synchronization, and a TC-RNTI value. The NR random access response includes the PRACH index used for the NR-PRACH transmission corresponding to the random access response. In addition, the NR random access response includes backoff related information used for suspension of the transmission of PRACH.

The base station 20 transmits the random access response on the NR-PDSCH. Based on the information included in the random access response, the terminal apparatus 40 judges whether the random access preamble has been successfully transmitted. When having judged that the transmission of the random access preamble has been successful, the terminal apparatus 40 performs transmission processing of the NR Message 3 in accordance with the information included in the random access response. In contrast, when the transmission of the random access preamble has failed, the terminal apparatus 40 judges that the random access procedure has been a failure, and performs the NR-PRACH retransmission processing.

The NR random access response may include a plurality of uplink grants for transmitting the NR Message 3. The terminal apparatus 40 can select one resource for transmitting Message 3 from among a plurality of uplink grants. This makes it possible to alleviate the collision of the NR Message 3 transmission in a case where the different terminal apparatuses 40 have received the same NR random access response. As a result, the communication system 1 can provide a random access procedure with higher stability.

### NR Message 3

The NR Message 3 is transmitted by an NR Physical Uplink Shared Channel (NR-PUSCH). The NR-PUSCH is transmitted by using the resource indicated by the random access response. The NR Message 3 includes an RRC connection request message. The format of the NR-PUSCH is indicated by a parameter included in the system information. For example, the parameter determines which of NR-PUSCH formats is to be used: Orthogonal Frequency Division Multiplexing (OFDM) or Discrete Fourier Transform Spread OFDM (DFT-s-OFDM).

When having received the NR Message 3 normally, the base station 20 proceeds to transmission processing of contention resolution (Message 4). In contrast, when not having received the NR Message 3 normally, the base station 20 reattempts to receive the NR Message 3 for at least a predetermined period.

Another example of the instruction for retransmission of Message 3 and the transmission resource includes an instruction by the NR-PDCCH used for the instruction to retransmit Message 3. The NR-PDCCH is an uplink grant. Downlink control information (DCI) of the NR-PDCCH instructs the resource for retransmission of Message 3. The terminal apparatus 40 retransmits Message 3 based on the instruction of the uplink grant.

When the reception of the contention resolution of the NR is not successful within the predetermined period, the terminal apparatus 40 regards that the random access procedure has failed, and performs NR-PRACH retransmission processing. The transmission beam of the terminal apparatus 40 used for retransmission of the NR Message 3 may be different from the transmission beam of the terminal apparatus 40 used for the initial transmission of Message 3. In a case where neither the NR contention resolution instruction nor Message 3 retransmission instruction has been received within the predetermined period, the terminal apparatus 40 regards that the random access procedure has failed, and performs the NR-PRACH retransmission processing. The predetermined period is set by system information, for example.

### NR contention resolution (Message 4)

The NR contention resolution is transmitted using the NR-PDSCH. The NR-PDSCH containing contention resolution is scheduled by the NR-PDCCH in which the CRC is scrambled by TC-RNTI or C-RNTI. The NR-PDCCH having CRC scrambled by TC-RNTI is placed in the CSS of the Type1-PDCCH CSS set. The NR-PDCCH may be placed in a user equipment specific search space (USS). Note that the NR-PDCCH may be placed in another CSS.

When having normally received the NR-PDSCH containing the contention resolution, the terminal apparatus 40 transmits a response of acknowledgment (ACK) to the base station 20. Thereafter, the terminal apparatus 40 regards that the random access procedure is successful, and proceeds to the connected state (RRC_CONNECTED). In contrast, when having received a negative acknowledgment (NACK) to the NR-PDSCH from the terminal apparatus 40 or when where there is no response, the base station 20 retransmits the NR-PDSCH containing the contention resolution. When not having received the NR contention resolution (Message 4) within a predetermined period, the terminal apparatus 40 regards that the random access procedure has failed, and performs the retransmission processing of the random access preamble (Message 1).

### <3-4. 2-STEP RACH in NR>

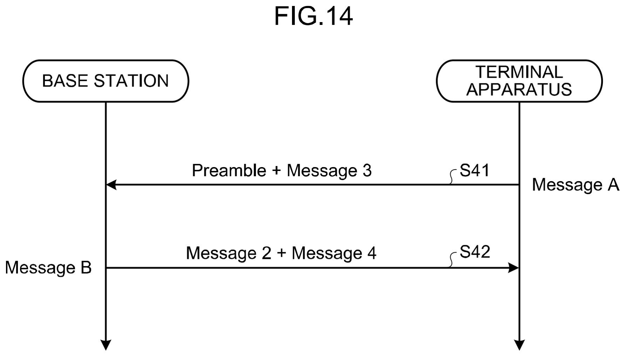

Next, an example of a 2-STEP RACH procedure in (hereinafter, referred to as a 2-Step random access procedure) in NR will be described. FIG. 14 is a diagram illustrating a 2-Step random access procedure. The 2-Step random access procedure includes two steps of Message A (Step S41) and Message B (Step S42). As an example, Message A includes Message 1 (preamble) and Message 3 of the conventional 4-Step random access procedure (4-STEP RACH procedure), while Message B includes Message 2 and Message 4 of the conventional 4-Step random access procedure. Furthermore, as an example, Message A includes a preamble (also referred to as PRACH) and the PUSCH, and Message B includes PDSCH.

By adopting the 2-Step random access procedure, the random access procedure can be completed with a lower latency as compared with the conventional 4-Step random access procedure.

The preamble and the PUSCH included in Message A may be set in association with each transmission resource, or may be set by independent resources.

When the setting is made with the individual transmission resources in association with each other, and in a case where the transmission resource of the preamble is determined, for example, the PUSCH transmission resource is determined as a unique resource, or a plurality of candidate transmission resource is determined. As an example, the time and frequency offsets between the preamble of a PRACH occasion and a PUSCH occasion are defined by one value. As another example, the time and the frequency offsets between the preamble of the PRACH occasion and the PUSCH occasion are set to different values for each preamble. The value of the offset may be determined by a specification, or may be semi-statically set by the base station 20. As an example, the value of the time and frequency offsets are defined by a predetermined frequency, for example. For example, in an unlicensed band (for example, 5 GHz band, band 45), the value of the time offset may be set to 0 or a value close to 0. With this setting, Listen Before Talk (LBT) can be omitted before transmission of the PUSCH.

On the other hand, when the transmission resources are set as independent resources, the transmission resources of the preamble and the PUSCH may be individually determined in the specification, or the resources may be semi-statically set by the base station 20, or may be determined based on other information. Examples of the other information include slot format information (for example, slot format indicator), Band Width Part (BWP) information, preamble transmission resource information, a slot index, and a resource block index. Furthermore, when the setting is made with individual resources, notification of the association between the preamble and the PUSCH constituting one Message A may be provided to the base station by the payload of the PUSCH or the UCI included in the PUSCH, or may be provided to the base station 20 by PUSCH transmission physical parameters (for example, the PUSCH scrambling sequence, a DMRS sequence and/or pattern, or the PUSCH transmission antenna port).

The method of setting the transmission resources of the preamble and the PUSCH may be switched between a case of setting by mutual association and a case of setting with independent resources. For example, it is allowable to adopt a case of setting using individual resource in a licensed band and adopt a case of setting with the transmission resources associated with each other in an unlicensed band.

### <<4. Operation of communication system>>

The basic operation of the communication system has been described above. Next, the operation of the communication system 1 of the present embodiment will be described in detail below.

The base station 20 in the following embodiment may be not only a terrestrial station (terrestrial base station) but also a non-terrestrial station (non-terrestrial base station) that operates as a communication apparatus, such as a satellite station, a drone, a balloon, or an airplane.

In the present embodiment, the resource indicates Frequency, Time, Resource Element (including REG, CCE, CORESET), Resource Block, Bandwidth Part, Component Carrier, Symbol, Sub-Symbol, Slot, Mini-Slot, Subslot, Subframe, Frame, PRACH occasion, Occasion, Code, Multi-access physical resource, Multi-access signature, and Subcarrier Spacing (Numerology), and the like.

In the present embodiment, the technology of locally forming a cell is referred to as pointforming, but the term is not limited thereto. In addition, in the following description, the communicable area formed by pointforming is referred to as a point cell, but the term is not limited thereto.

### <4-1. Outline of point cell determination means>

As described above, the base station 20 performs cooperative control of the plurality of antennas to concentrate power at a specific point, thereby achieving formation of a point cell. That is, the base station 20 can form the point cell by the pointforming function.

Here, the pointforming may be characterized in that initial phases differ between transmission antenna elements when power is concentrated at a specific point. On the other hand, the beamforming may be characterized in that, when a beam is formed in a specific direction, initial phase offsets are the same between transmission antenna elements.

The point cell is a communication area provided to the terminal apparatus 40 by pointforming. The term of the communication area is not limited to the point cell.

The base station 20 and/or the terminal apparatus 40 execute processing for determining a point cell to which the terminal apparatus 40 belongs. The determination means of the point cell may be one of the following (M1) to (M3). Naturally, the point cell determination means may be means other than (M1) to (M3).
(M1) Point cell determination means based on power of synchronization signal
(M2) Point cell determination means based on position information
(M3) Point cell determination means based on anchor cell

The terminal apparatus 40 performs the initial access based on one of the above (M1) to (M3). Which of the above means (M1) to (M3) is to be used by the base station 20 and/or the terminal apparatus 40 to determine the point cell may be determined by an administrator (such as a network operator) of the communication system 1.

Hereinafter, outlines of the above (M1) to (M3) will be described.

### (M1) Point cell determination means based on power of synchronization signal

The point cell to which the terminal apparatus 40 belongs may be determined based on a synchronization signal (for example, the power of the synchronization signal) transmitted by the base station 20. For example, the point cell to which the terminal apparatus 40 belongs may be determined based on the power of the synchronization signal transmitted by the base station 20. The point cell determination means based on the synchronization signal may be either the following Type 1 or Type 2. Naturally, the point cell determination means by the synchronization signal may be means other than Type 1 and Type 2.

### (1) Type 1

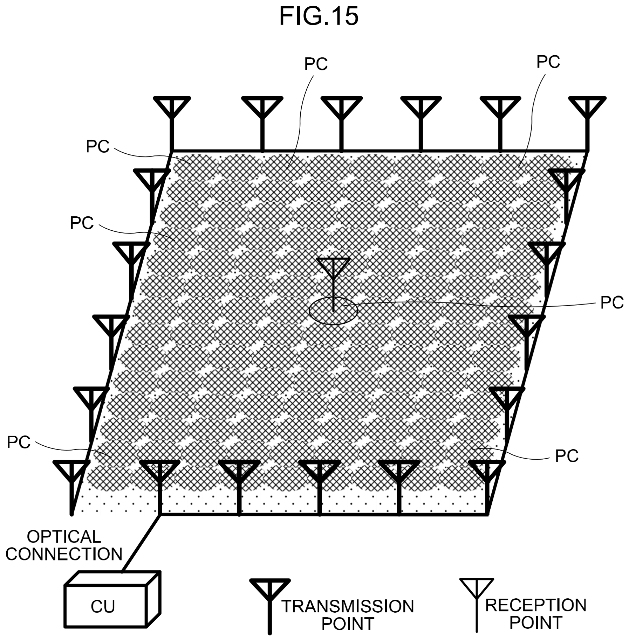

FIG. 15 is a diagram for illustrating an example of a point cell determination means based on power of a synchronization signal. The base station 20 forms a plurality of point cells PC covering a predetermined area. The base station 20 executes processing for determining the point cell PC to which the terminal apparatus 40 belongs. For example, the base station 20 transmits, to the terminal apparatus 40, a plurality of synchronization signals for the terminal apparatus 40 to identify the point cell PC. Subsequently, the terminal apparatus 40 determines the point cell PC to be connected based on the received synchronization signal. For example, the terminal apparatus 40 preliminarily holds information for associating predetermined information (for example, at least one piece of information of a sequence, a frequency resource, and a time resource) regarding a synchronization signal, with point cell ID. Subsequently, the terminal apparatus 40 specifies the point cell PC to be connected based on the preliminarily held information and the received synchronization signal. After the point cell PC is specified, the terminal apparatus 40 is connected to the specified point cell PC.

### (2) Type 2

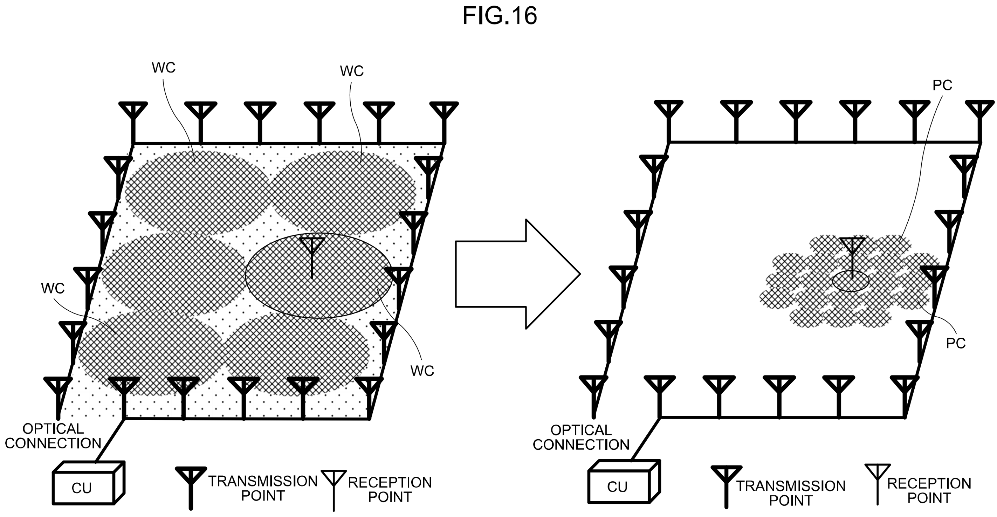

FIG. 16 is a diagram for illustrating another example of a point cell determination means based on power of a synchronization signal. The base station 20 can form a wide cell WC, being a cell having a wider area than the point cell PC. When the wide cell WC is formed by the pointforming function, the wide cell WC may also be referred to as a wide point cell. In this case, the point cell PC may also be referred to as a small point cell. The wide cell WC is not limited to the cell formed by the pointforming function. For example, the wide cell WC may be a conventional communication cell (classic cell) or a cell formed by the beamforming function. These terms of cells are not limited to a wide cell/wide point cell or a point cell/small point cell.

The base station 20 forms one or a plurality of wide cells WC covering a predetermined area and a plurality of point cells PC covering the wide cells WC. The terminal apparatus 40 selects a wide cell WC to be connected. Subsequently, the terminal apparatus 40 is connected (for example, attach) to the base station 20. After the terminal apparatus 40 is connected to the wide cell WC, the base station 20 transmits, to the terminal apparatus 40, a plurality of synchronization signals for the terminal apparatus 40 to identify the point cell PC included in the wide cell WC to which the terminal apparatus 40 belongs. Subsequently, the terminal apparatus 40 determines the point cell PC to be connected based on the received synchronization signal. For example, the terminal apparatus 40 preliminarily holds information for associating predetermined information (for example, at least one piece of information of a sequence, a frequency resource, and a time resource) regarding a synchronization signal, with point cell ID. Subsequently, the terminal apparatus 40 specifies the point cell PC to be connected based on the preliminarily held information and the received synchronization signal. After the point cell PC is specified, the terminal apparatus 40 is connected to the specified point cell PC.

### (M2) Point cell determination means based on position information

The base station 20 can form a cell different from the point cell PC. For example, the base station 20 can form a wide cell WC, being a cell having a wider area than the point cell PC. The terminal apparatus 40 selects a cell (for example, a wide cell WC) to be connected. Subsequently, the terminal apparatus 40 is connected to the base station 20. During or after connection, the base station 20 acquires position information of the terminal apparatus 40. At this time, the base station 20 may acquire the position information from the terminal apparatus 40. Furthermore, the base station 20 may measure the position of the terminal apparatus 40 and acquire the measurement information as the position information of the terminal apparatus 40. Subsequently, based on the position information of the terminal apparatus 40, the base station 20 determines the point cell to which the terminal apparatus 40 belongs.

With this means (point cell determination means by position information), the base station 20 can determine an appropriate point cell based on the position information of the terminal apparatus 40. Therefore, there is no need to perform association between the synchronization signal and the point cell as described in the point cell determination means based on the power of the synchronization signal described above.

### (M3) Point cell determination means based on anchor cell

When making a connection to the point cell, the terminal apparatus 40 may connect to a conventional base station (another base station) that does not perform pointforming. For example, in a case where there is a cell serving as an anchor formed by a conventional base station, the terminal apparatus 40 may connect to the cell serving as an anchor. After the connection, the base station 20 and/or the terminal apparatus 40 may determine the point cell to which the terminal apparatus 40 belongs based on information from the another base station 20. For example, the terminal apparatus 40 may determine the point cell to which the terminal apparatus 40 belongs by communication in a cell serving as an anchor.

### <4-2. Details of point cell determination means>

The outline of the point cell determination means has been described above. Hereinafter, the point cell determination means will be described in detail.

### <4-2-1. Point cell determination means based on synchronization signal>

First, a point cell determination means based on a synchronization signal will be described in detail.

For example, the point cell to which the terminal apparatus 40 belongs may be determined based on the synchronization signal transmitted by the base station 20. For example, the point cell to which the terminal apparatus 40 belongs may be determined based on the power of the synchronization signal transmitted by the base station 20. As described above, the point cell determination means based on the synchronization signal may be either Type 1 or Type 2. Hereinafter, Type 1 and Type 2 will be described in detail.

### (1) Type 1

The base station 20 preliminarily forms a plurality of point cells (for example, the point cell PC illustrated in FIG. 15) covering the entire area of a predetermined area (for example, a support area for pointforming). Subsequently, the base station 20 transmits, to the terminal apparatus 40, a plurality of synchronization signals for the terminal apparatus 40 to identify the point cell. Subsequently, the terminal apparatus 40 determines a point cell to be attached based on the received synchronization signal.

In the present implementation example, the base station 20 preliminarily forms a point cell in the entire region of a predetermined area. The terminal apparatus 40 receives a synchronization signal of a point cell to which the terminal apparatus 40 belongs. Subsequently, using the resource corresponding to the synchronization signal, the terminal apparatus 40 transmits Message 1 of the initial access procedure (random access procedure).

Having received the message, the base station 20 can judge the point cell to which the terminal apparatus 40 belongs depending on which point cell has received Message 1 of the initial access procedure (random access procedure).

The base station 20 may transmit a plurality of synchronization signals at the same time. For example, the base station 20 may transmit a plurality of synchronization signals at the same time regarding transmission of synchronization signals of a plurality of point cells covering a predetermined area. When a synchronization signal is transmitted at the same time, the transmission power is distributed by the number of point cells, leading to a probability of reception quality degradation in the point cells. However, synchronization signals are transmitted at the same time, maximizing the spatial multiplexing efficiency.

The base station 20 may transmit a plurality of synchronization signals in a state of being distributed at different times. In a case where synchronization signals are transmitted in state of being distributed at different times, there is a time during which communication cannot be performed in each point cell. This leads to a possibility of spatial multiplexing efficiency degradation as compared with a case where synchronization signals are transmitted at the same time. However, since the synchronization signals are transmitted in a state of being distributed at different times, reception quality in the point cell is improved.

### (2) Type 2

The base station 20 preliminarily forms one or a plurality of wide point cells (for example, the wide cell WC illustrated in FIG. 16) covering a predetermined area, and the terminal apparatus 40 selects the wide point cell to be attached. After attaching to the wide point cell, the base station 20 and/or the terminal apparatus 40 perform a selection procedure of a suitable small point cell among small point cells (for example, the point cells PC illustrated in FIG. 16) belonging to the selected wide point cell.

In the following description, a wide cell (for example, the wide cell WC illustrated in FIG. 16) is referred to as a wide point cell, while a point cell (for example, the point cell PC illustrated in FIG. 16) is referred to as a small point cell. The wide point cell in the following description can be rephrased as a wide cell, while the small point cell can be rephrased as a point cell.

The base station 20 preliminarily forms one or a plurality of wide point cells in a predetermined area (for example, a pointforming support area). Subsequently, the base station 20 transmits, to the terminal apparatus 40, a plurality of synchronization signals for the terminal apparatus 40 to identify the wide cell. The terminal apparatus 40 receives a synchronization signal of a wide point cell to which the terminal apparatus 40 belongs. Subsequently, using the resource corresponding to the synchronization signal, the terminal apparatus 40 transmits Message 1 of the initial access procedure (random access procedure).

Having received the message, the base station 20 can judge the wide point cell to which the terminal apparatus 40 belongs depending on which wide point cell has received Message 1 of the initial access procedure (random access procedure).

The base station 20 may transmit a plurality of synchronization signals at the same time. For example, the base station 20 may transmit a plurality of synchronization signals at the same time regarding transmission of synchronization signals of a plurality of wide point cells covering a predetermined area. When a synchronization signal is transmitted at the same time, the transmission power is distributed by the number of wide point cells, leading to a probability of reception quality degradation in the wide point cells. However, synchronization signals are transmitted at the same time, maximizing the spatial multiplexing efficiency.

The base station 20 may transmit a plurality of synchronization signals in a state of being distributed at different times. In a case where synchronization signals are transmitted in state of being distributed at different times, there is a time during which communication cannot be performed in each point cell. This leads to a possibility of spatial multiplexing efficiency degradation as compared with a case where synchronization signals are transmitted at the same time. However, when the synchronization signals are transmitted in a state of being distributed at different times, reception quality in the point cell is improved.

After performing the initial access, the base station 20 and the terminal apparatus 40 perform communication in the wide point cell to which the terminal apparatus 40 belongs.

After the terminal apparatus 40 is connected to the wide point cell, the base station 20 may transmit, to the terminal apparatus 40, a plurality of synchronization signals for the terminal apparatus 40 to identify the small point cell included in the wide point cell to which the terminal apparatus 40 belongs. Subsequently, the terminal apparatus 40 may determine a small point cell to be connected based on the received synchronization signal.

After the terminal apparatus 40 starts communication in the wide point cell, the base station 20 may perform processing for changing the cell to which the terminal apparatus 40 is connected from the wide point cell to the small point cell. For example, the base station 20 may transmit a plurality of different reference signals associated with a plurality of small point cells, to the terminal apparatus 40. For example, the terminal apparatus 40 may measure the reception quality of the received reference signal and provide the result to the base station 20 as a feedback. Based on the feedback information from the terminal apparatus 40, the base station 20 that has received the feedback may determine the point cell to which the terminal apparatus 40 belongs.

Subsequently, the terminal apparatus 40 may perform random access with the small point cell determined by the base station 20. At this stage, the terminal apparatus 40 has already completed the connection to the wide point cell. Accordingly, the base station 20 may transmit only the synchronization signal of the small point cell belonging to the area of the wide point cell. At this time, the synchronization signal of the small point cell and the small point cell ID may be associated with each other. Subsequently, the terminal apparatus 40 may discern the small point cell ID to be connected based on the synchronization signal.

The base station 20 and the terminal apparatus 40 may be configured to be able to combine a plurality of bands by carrier aggregation or dual connectivity. The base station 20 and the terminal apparatus 40 may perform communication using at least one band of a plurality of bands as a band providing a point cell.

For example, the base station 20 and the terminal apparatus 40 may apply a wide point cell and a small point cell in combination with a mechanism such as carrier aggregation or dual connectivity. For example, the base station 20 and the terminal apparatus 40 may perform communication using at least one of the plurality of bands as a band providing a wide point cell and using at least another band as a band providing a small point cell.

For example, the base station 20 and the terminal apparatus 40 may set band A used in carrier aggregation as a band providing a wide point cell, and set band B used in carrier aggregation as a band providing a small point cell. In addition, the base station 20 and the terminal apparatus 40 may set band A used in dual connectivity as a band providing the wide point cell, and set band B used in dual connectivity as a band providing the small point cell. In addition, the terminal apparatus 40 may set base station A used in dual connectivity as a band providing a wide point cell, and set base station B used in dual connectivity as a band providing the small point cell.

### <4-2-2. Point cell determination means based on position information>

Next, the point cell determination means based on the position information will be described in detail.

The base station 20 preliminarily forms one or a plurality of cells covering a predetermined area. At this time, the cell formed by the base station 20 may be a cell different from the point cell (small point cell). For example, the cell formed by the base station 20 may be a wide cell. Subsequently, the terminal apparatus 40 selects a cell to be attached and attaches the cell. During or after the attach, the base station 20 acquires the position information of the terminal apparatus 40. At this time, the base station 20 may acquire the position information from the terminal apparatus 40. Furthermore, the base station 20 may measure the position of the terminal apparatus 40 and acquire the measurement information as the position information of the terminal apparatus 40. Subsequently, based on the position information of the terminal apparatus 40, the base station 20 determines the point cell to which the terminal apparatus 40 belongs.

The base station 20 preliminarily forms one or a plurality of cells (for example, a wide cell) in a predetermined area (for example, a pointforming support area). Subsequently, the base station 20 transmits, to the terminal apparatus 40, a plurality of synchronization signals for the terminal apparatus 40 to identify the cell. The terminal apparatus 40 receives a synchronization signal of a cell to which the terminal apparatus 40 belongs. Subsequently, using the resource corresponding to the synchronization signal, the terminal apparatus 40 transmits Message 1 of the initial access procedure (random access procedure).

Having received the message, the base station 20 can judge the cell to which the terminal apparatus 40 belongs depending on which cell has received Message 1 of the initial access procedure (random access procedure).

During or after performing the initial access, the base station 20 acquires the position information of the terminal apparatus 40.

At this time, the base station 20 may acquire the position information from the terminal apparatus 40. For example, the terminal apparatus 40 may measure the position of the terminal apparatus 40 based on information such as a position measurement device included in the terminal apparatus 40. The terminal apparatus 40 may notify the base station 20 of the measured position. The base station 20 may acquire the information notification of which is provided from the terminal apparatus 40 as the position information of the terminal apparatus 40.

Furthermore, the base station 20 may measure the position of the terminal apparatus 40. Subsequently, the base station 20 may acquire the measurement information as the position information of the terminal apparatus 40. At this time, the base station 20 may transmit a reference signal (for example, positioning reference signal) for position measurement to the terminal apparatus 40, and the terminal apparatus 40 may transmit a measurement result to the base station 20 as a feedback.

Note that the base station 20 may acquire the position information of the terminal apparatus 40 using Zone ID used in Vehicle to X (V2X) or the like.

Subsequently, the base station 20 may determine the point cell (small point cell) to which the terminal apparatus 40 belongs based on the position information of the terminal apparatus 40. The base station 20 may notify the terminal apparatus 40 of information necessary for communication in the point cell.

Subsequently, the terminal apparatus 40 performs communication in the point cell to which the terminal apparatus 40 belongs.

### <4-2-3. Point cell determination means based on anchor cell>

Next, the point cell determination means based on the anchor cell will be described in detail.

When making a connection to the point cell, the terminal apparatus 40 may attach to a cell serving as an anchor formed by a conventional base station (another base station) that does not perform pointforming. After the attaching, the base station 20 and/or the terminal apparatus 40 may determine the point cell to which the terminal apparatus 40 belongs based on information from the another base station 20.

In the present implementation example, the terminal apparatus 40 receives a synchronization signal of an anchor cell formed by a conventional base station. Subsequently, using the resource corresponding to the synchronization signal, the terminal apparatus 40 transmits Message 1 of the initial access procedure (random access procedure).

Having received the message, the base station 20 can judge the anchor cell to which the terminal apparatus 40 belongs depending on which cell has received Message 1 of the initial access procedure (random access procedure).

After performing the initial access, the base station 20 and the terminal apparatus 40 perform communication in the anchor cell.

After starting the communication, the base station 20 may perform processing for adding a point cell (small point cell) (hereinafter, referred to as point cell addition processing). The point cell addition processing may be one of the following (1) to (3).

### (1) Point cell addition processing based on power measurement

For example, the base station 20 may notify the terminal apparatus 40 of information necessary for communication with the point cell by communication in the anchor cell.

Furthermore, the base station 20 may transmit a plurality of different reference signals associated with the point cell, to the terminal apparatus 40. At this time, the terminal apparatus 40 may measure the reception quality of the received reference signal and provide the result to the base station 20 as a feedback. Based on the feedback information from the terminal apparatus 40, the base station 20 that has received the feedback may determine the point cell to which the terminal apparatus 40 belongs. Subsequently, the terminal apparatus 40 may start communication with the determined point cell.

In addition, the terminal apparatus 40 may perform random access with the point cell using random access information regarding the point cell.

### (2) Point cell addition processing based on position information

During or after performing the initial access, the base station 20 may acquire the position information of the terminal apparatus 40.

At this time, the base station 20 may acquire the position information from the terminal apparatus 40. For example, the terminal apparatus 40 may measure the position of the terminal apparatus 40 based on information such as a position measurement device included in the terminal apparatus 40. The terminal apparatus 40 may notify the base station 20 of the measured position. The base station 20 may acquire the information notification of which is provided from the terminal apparatus 40 as the position information of the terminal apparatus 40.

Furthermore, the base station 20 may measure the position of the terminal apparatus 40. Subsequently, the base station 20 may acquire the measurement information as the position information of the terminal apparatus 40. At this time, the base station 20 may transmit a reference signal (for example, positioning reference signal) for position measurement to the terminal apparatus 40, and the terminal apparatus 40 may transmit a measurement result to the base station 20 as a feedback.

Subsequently, the base station 20 may determine the point cell (small point cell) to which the terminal apparatus 40 belongs based on the position information of the terminal apparatus 40. The base station 20 may notify the terminal apparatus 40 of information necessary for communication at the point cell by communication in the anchor cell.

Subsequently, the terminal apparatus 40 performs communication in the point cell to which the terminal apparatus 40 belongs.

### (3) Point cell addition processing based on information from another base station

The base station 20 may acquire the information regarding the terminal apparatus 40 from a conventional base station (another base station) that provides an anchor cell to the terminal apparatus 40. Subsequently, the base station 20 may determine the point cell to which the terminal apparatus 40 belongs based on information from the conventional base station (another base station).

Furthermore, a conventional base station (another base station) that provides an anchor cell to the terminal apparatus 40 may be configured to be capable of determining a point cell to which the terminal apparatus 40 belongs. The base station 20 may acquire determination information of the point cell to which the terminal apparatus 40 belongs from a conventional base station (another base station). Subsequently, the base station 20 may determine the point cell to which the terminal apparatus 40 belongs based on the determination information acquired from the conventional base station (another base station).

### <4-2-4. Supplementary notes>

The synchronization signal transmitted from the base station 20 may be one of the following (A1) to (A3).
(A1) Primary Synchronization Signal (PSS)
(A2) Secondary Synchronization signal (SSS)
(A3) Tertiary Synchronization signal (TSS)

The system information transmitted from the base station 20 may be transmitted by one of the following (B1) to (B2).
(B1) Physical Broadcast channel (PBCH)
(B2) Physical Downlink Shared channel (PDSCH)

As information necessary for determining the point cell, notification of at least one of the following pieces of information (C1) to (C3) may be provided from the terminal apparatus 40 to the base station 20.
(C1) Position measurement capability information
(C2) Position information of terminal apparatus
(C3) Channel information

For example, the terminal apparatus 40 receives a reference signal transmitted from the base station 20 and measures a channel matrix between each antenna element and the terminal apparatus 40. Subsequently, the terminal apparatus 40 notifies the base station 20 of the measurement result as channel information. The terminal apparatus 40 may notify the base station 20 of unprocessed measurement result as channel information. Alternatively, the terminal apparatus 40 may apply eigenvalue decomposition on the channel matrix to obtain an eigenvalue vector, and notify the base station 20 of the eigenvalue vector as channel information.

### <<5. Sequence example>>

The operation of the communication system has been described above. Next, a sequence example of the initial access processing of the present embodiment will be described.

The following will describe how a 4-Step random access procedure (4-step RACH) and a 2-Step random access procedure (2-step RACH), which are means of initial access, relate to determination of a point cell.

As described above, the point cell determination means may be one of the following (M1) to (M3).
(M1) Point cell determination means based on synchronization signal
(M2) Point cell determination means based on position information
(M3) Point cell determination means based on anchor cell

Hereinafter, a sequence example will be described for each of (M1) to (M3).

### <5-1. Point cell determination means based on synchronization signal>

First, a sequence example of initial access processing related to a point cell determination means based on a synchronization signal will be described. The point cell determination means based on the synchronization signal may be one of the following (M1-1) to (M1-4).
(M1-1) Means of determining a point cell during 4-Step RACH processing
(M1-2) Means of determining wide cell (wide point cell) and point cell (small point cell) during 4-Step RACH processing
(M1-3) Means of determining a point cell during 2-Step RACH processing
(M1-4) Means of determining wide cell (wide point cell) and point cell (small point cell) during 2-Step RACH processing

Hereinafter, a sequence example of the initial access processing will be described for each of (M1-1) to (M1-4). The following processing is executed by, for example, the control unit 23 (the acquisition unit 231, the formation unit 232, the determination processing unit 233, the connection processing unit 234, or the measurement unit 235) of the base station 20 and the control unit 43 (determination processing unit 431 or communication control unit 432) of the terminal apparatus 40.

### <5-1-1. Sequence example according to M1-1>

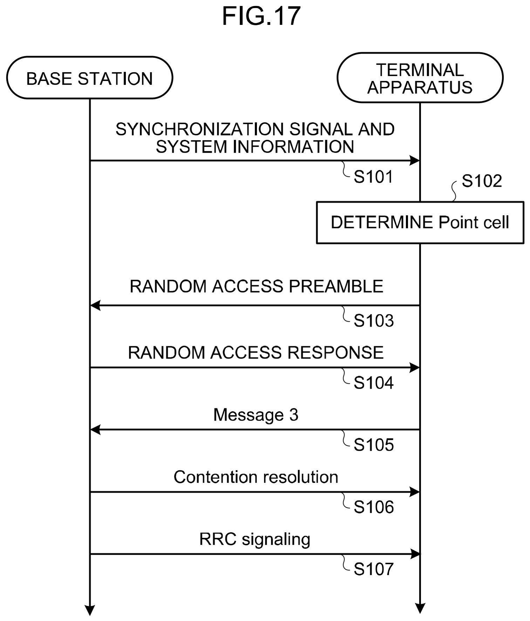

FIG. 17 is a diagram illustrating a sequence example of initial access processing related to the means of determining a point cell during 4-Step RACH processing. Hereinafter, the initial access processing according to the present means will be described with reference to FIG. 17.

The base station 20 transmits a synchronization signal and system information to the terminal apparatus 40 (Step S101). At this time, the synchronization signal and/or the system information may include information by which each point cell can be discerned.

The terminal apparatus 40 receives the synchronization signal and the system information, and determines a point cell based on the received synchronization signal and system information (Step S102).

The terminal apparatus 40 transmits a random access preamble to the base station 20 (Step S103). At this time, the random access preamble may be transmitted with a sequence of the random access preamble and/or a transmission resource configuration corresponding to the point cell.

The base station 20 transmits a random access response to the terminal apparatus 40 (Step S104).

The terminal apparatus 40 transmits Message 3 information in the random access to the base station 20 (Step S105). At this time, the position information of the terminal may be included in Message 3 information.

The base station 20 transmits contention resolution to the terminal apparatus 40 (Step S106). Subsequently, the base station 20 transmits RRC signaling information to the terminal apparatus 40 (Step S107).

### <5-1-2. Sequence example according to M1-2>

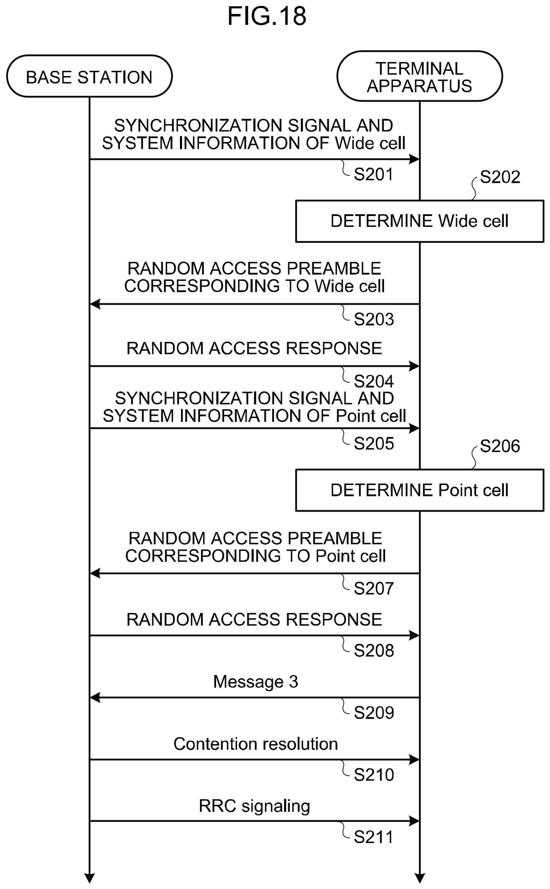

FIG. 18 is a diagram illustrating a sequence example of initial access processing related to the means of determining a wide cell and a point cell during 4-Step RACH processing. The wide cell in the following description can be replaced with a wide point cell, and the point cell with a small point cell. Hereinafter, initial access processing according to the present means will be described with reference to FIG. 18.

The base station 20 transmits a synchronization signal and system information of a wide cell (wide point cell) to the terminal apparatus 40 (Step S201). At this time, the synchronization signal and/or the system information may include information by which each wide cell (wide point cell) can be discerned.

The terminal apparatus 40 receives the synchronization signal and the system information, and determines a wide cell (wide point cell) based on the received synchronization signal and the system information (Step S202).

The terminal apparatus 40 transmits a random access preamble to the base station 20 (Step S203). At this time, the random access preamble may be transmitted with a sequence of the random access preamble and/or a transmission resource configuration corresponding to the wide cell (wide point cell).

The base station 20 transmits a random access response to the terminal apparatus 40 (Step S204). Here, the terminal apparatus 40 may be notified of information such as information regarding transmission implementation of a synchronization signal or system information of a point cell (small point cell) and information regarding transmission resources.

The base station 20 transmits a synchronization signal and system information of a point cell (small point cell) to the terminal apparatus 40 (Step S205). At this time, the synchronization signal and/or the system information may include information by which each point cell (small point cell) can be discerned.

The terminal apparatus 40 receives the synchronization signal and the system information, and determines a point cell (small point cell) based on the received synchronization signal and the system information (Step S206).

The terminal apparatus 40 transmits a random access preamble to the base station 20 (Step S207). At this time, the random access preamble may be transmitted with a sequence of the random access preamble and/or a transmission resource configuration corresponding to the point cell (small point cell).

The base station 20 transmits a random access response to the terminal apparatus 40 (Step S208).

The terminal apparatus 40 transmits Message 3 information in the random access to the base station 20 (Step S209). At this time, the position information of the terminal apparatus 40 may be included in Message 3 information.

The base station 20 transmits contention resolution to the terminal apparatus 40 (Step S210). Subsequently, the base station 20 transmits RRC signaling information to the terminal apparatus 40 (Step S211).

### <5-1-3. Sequence example according to M1-3>

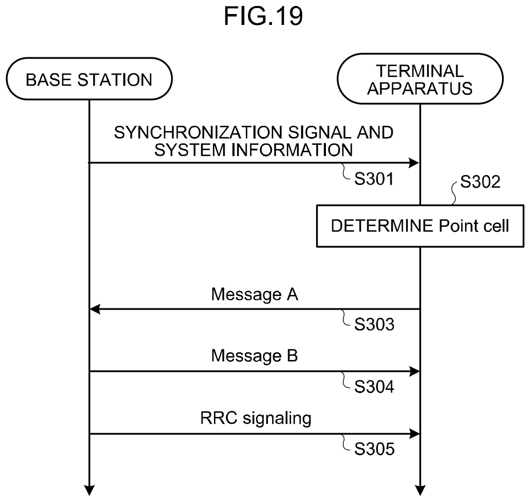

FIG. 19 is a diagram illustrating a sequence example of initial access processing related to the means of determining a point cell during 2-Step RACH processing. Hereinafter, initial access processing according to the present means will be described with reference to FIG. 19.

The base station 20 transmits a synchronization signal and system information to the terminal apparatus 40 (Step S301). At this time, the synchronization signal and/or the system information may include information by which each point cell can be discerned.

The terminal apparatus 40 receives the synchronization signal and the system information, and determines a point cell based on the received synchronization signal and system information (Step S302).

The terminal apparatus 40 transmits the random access preamble and Message 3 information to the base station 20 (Step S303). At this time, the random access preamble may be transmitted with a sequence of the random access preamble and/or a transmission resource configuration corresponding to the point cell. The Message 3 information may include position information of the terminal apparatus 40. This information may be referred to as Message A or may be referred to as another term.

The base station 20 transmits a random access response and contention resolution to the terminal apparatus 40 (Step S304). This information may be referred to as Message B or may be referred to as another term.

The base station 20 transmits RRC signaling information to the terminal apparatus 40 (Step S305).

### <5-1-4. Sequence example according to M1-4>

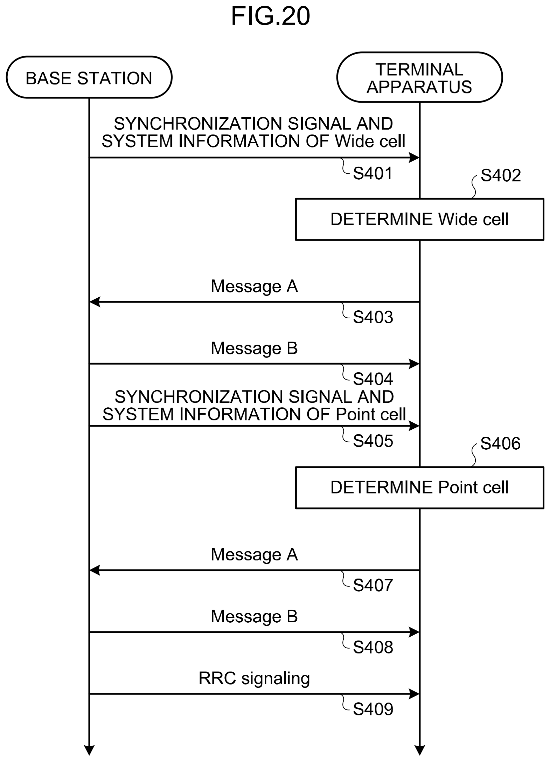

FIG. 20 is a diagram illustrating a sequence example of initial access processing related to the means of determining a wide cell and a point cell during 2-Step RACH processing. The wide cell in the following description can be replaced with a wide point cell, and the point cell with a small point cell. Hereinafter, initial access processing according to the present means will be described with reference to FIG. 20.

The base station 20 transmits a synchronization signal and system information of a wide cell (wide point cell) to the terminal apparatus 40 (Step S401). At this time, the synchronization signal and/or the system information may include information by which each wide cell (wide point cell) can be discerned.

The terminal apparatus 40 receives the synchronization signal and the system information, and determines a wide cell (wide point cell) based on the received synchronization signal and the system information (Step S402).

The terminal apparatus 40 transmits the random access preamble and Message 3 information to the base station 20 (Step S403). At this time, the random access preamble may be transmitted with a sequence of the random access preamble and/or a transmission resource configuration corresponding to the wide cell (wide point cell). The Message 3 information may include position information of the terminal apparatus 40. This information may be referred to as Message A or may be referred to as another term.

The base station 20 transmits a random access response and contention resolution to the terminal apparatus 40 (Step S404). This information may be referred to as Message B or may be referred to as another term. Here, the terminal apparatus 40 may be notified of information regarding transmission implementation of a synchronization signal or system information of a point cell (small point cell), information regarding transmission resources, and the like.

The base station 20 transmits a synchronization signal and system information of a point cell (small point cell) to the terminal apparatus 40 (Step S405). At this time, the synchronization signal and/or the system information may include information by which each point cell (small point cell) can be discerned.

The terminal apparatus 40 receives the synchronization signal and the system information, and determines a point cell (small point cell) based on the received synchronization signal and the system information (Step S406).

The terminal apparatus 40 transmits the random access preamble and Message 3 information to the base station 20 (Step S407). At this time, the random access preamble may be transmitted with a sequence of the random access preamble and/or a transmission resource configuration corresponding to the point cell (small point cell). The Message 3 information may include position information of the terminal apparatus 40. This information may be referred to as Message A or may be referred to as another term.

The base station 20 transmits a random access response and contention resolution to the terminal apparatus 40 (Step S408). This information may be referred to as Message B or may be referred to as another term.

The base station 20 transmits RRC signaling information to the terminal apparatus 40 (Step S409).

### <5-2. Point cell determination means based on position information>

Next, a sequence example of initial access processing related to a point cell determination means based on position information will be described. The point cell determination means based on position information may be one of the following (M2-1) to (M2-4).
(M2-1) Means of determining point cell during 4-Step RACH processing (case of transmitting SRS during random access preamble transmission to perform position measurement)
(M2-2) Means of determining point cell during 4-Step RACH processing (case of transmitting PRS during random access response transmission to perform position measurement)
(M2-3) Means of determining point cell during 4-Step RACH processing (case of transmitting SRS during Message 3 transmission to perform position measurement)
(M2-4) Means of determining point cell during 4-Step RACH processing (case of transmitting PRS after random access to perform position measurement)
(M2-5) Means of determining point cell during 4-Step RACH processing (case of transmitting SRS after random access to perform position measurement)
(M2-6) Means of determining point cell during 2-Step RACH processing (case of transmitting SRS during Message A transmission to perform position measurement)
(M2-7) Means of determining point cell during 2-Step RACH processing (case of transmitting PRS after random access to perform position measurement)
(M2-8) Means of determining point cell during 2-Step RACH processing (case of transmitting SRS after random access to perform position measurement)

Hereinafter, a sequence example of the initial access processing will be described for each of (M2-1) to (M2-8). The following processing is executed by, for example, the control unit 23 (the acquisition unit 231, the formation unit 232, the determination processing unit 233, the connection processing unit 234, or the measurement unit 235) of the base station 20 and the control unit 43 (determination processing unit 431 or communication control unit 432) of the terminal apparatus 40.

### <5-2-1. Sequence example according to M2-1>

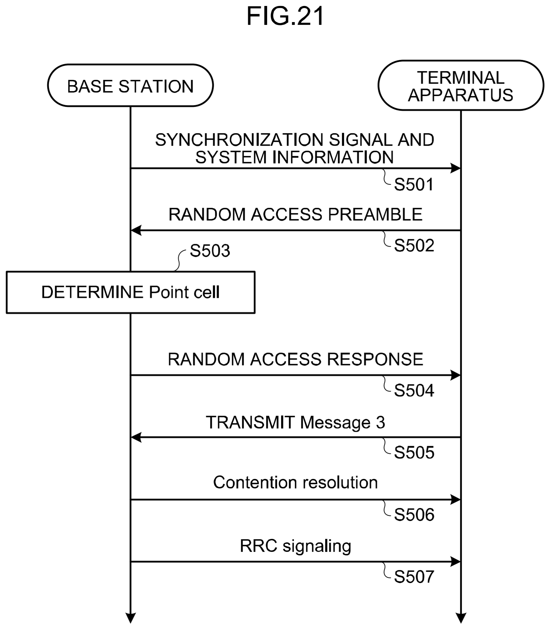

FIG. 21 is a diagram illustrating a sequence example of initial access processing related to the means of determining a point cell during 4-Step RACH processing. Here, the following will describe a point cell determination means when performing position measurement by transmitting a Sounding Reference Signal (SRS) at the time of transmitting the random access preamble. Hereinafter, initial access processing according to the present means will be described with reference to FIG. 21.

The base station 20 transmits a synchronization signal and system information to the terminal apparatus 40 (Step S501). Here, in order to estimate the position of the terminal apparatus 40, transmission of a Sounding Reference Signal (SRS) may be requested by the system information or the like.

The terminal apparatus 40 receives the synchronization signal and the system information. Subsequently, the terminal apparatus 40 transmits the random access preamble to the base station 20 (Step S502). At this time, the terminal apparatus 40 transmits the SRS to the base station 20 together with the random access preamble.

The base station 20 determines a point cell using the terminal position information measured from the received SRS (Step S503). Subsequently, the base station 20 transmits a random access response to the terminal apparatus 40 (Step S504). Here, the base station 20 may notify the terminal apparatus 40 of information of the point cell to be connected.

The terminal apparatus 40 transmits Message 3 information in the random access to the base station 20 (Step S505).

The base station 20 transmits contention resolution to the terminal apparatus 40 (Step S506). Here, the base station 20 may notify the terminal apparatus 40 of information of the point cell to be connected. Subsequently, the base station 20 transmits RRC signaling information to the terminal apparatus 40 (Step S507). Here, the base station 20 may notify the terminal apparatus 40 of information of the point cell to be connected.

### <5-2-2. Sequence example according to M2-2>

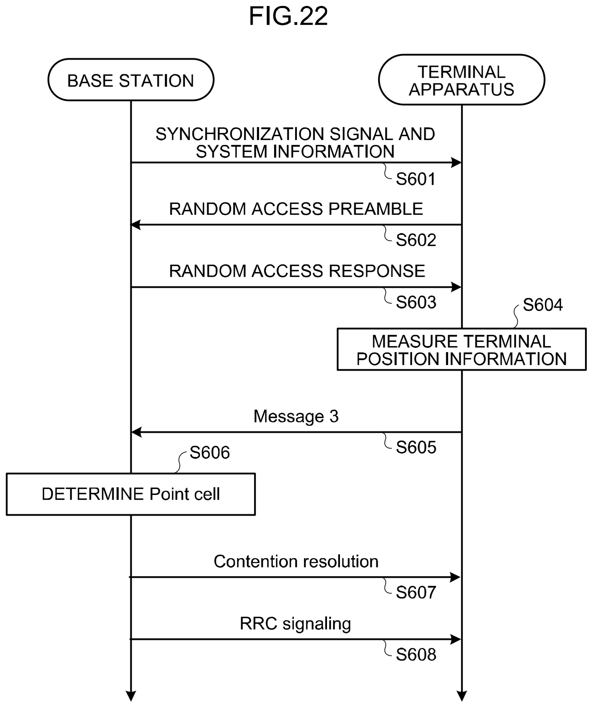

FIG. 22 is a diagram illustrating a sequence example of initial access processing related to the means of determining a point cell during 4-Step RACH processing. Here, the following will describe a point cell determination means when performing position measurement by transmitting a Positioning Reference Signal (PRS) at the time of transmitting the random access response. Hereinafter, initial access processing according to the present means will be described with reference to FIG. 22.

The base station 20 transmits a synchronization signal and system information to the terminal apparatus 40 (Step S601).

The terminal apparatus 40 receives the synchronization signal and the system information. Subsequently, the terminal apparatus 40 transmits the random access preamble to the base station 20 (Step S602).

The base station 20 transmits a random access response to the terminal apparatus 40 (Step S603). Here, for the purpose of position measurement in the terminal apparatus 40, the base station 20 may also transmit a Positioning Reference Signal (PRS) to the terminal apparatus 40.

The terminal apparatus 40 performs position measurement of the terminal apparatus 40 using the received PRS (Step S604). Subsequently, the terminal apparatus 40 transmits Message 3 information in the random access to the base station 20 (Step S605). Here, the terminal apparatus 40 may notify the base station 20 of the position measurement result regarding the terminal apparatus 40 together with Message 3.

The base station 20 determines a point cell using the received terminal position information (Step S606). Subsequently, the base station 20 transmits contention resolution to the terminal apparatus 40 (Step S607). Here, the base station 20 may notify the terminal apparatus 40 of information of the point cell to be connected.

The base station 20 transmits RRC signaling information to the terminal apparatus 40 (Step S608). Here, the base station 20 may notify the terminal apparatus 40 of information of the point cell to be connected.

### <5-2-3. Sequence example according to M2-3>

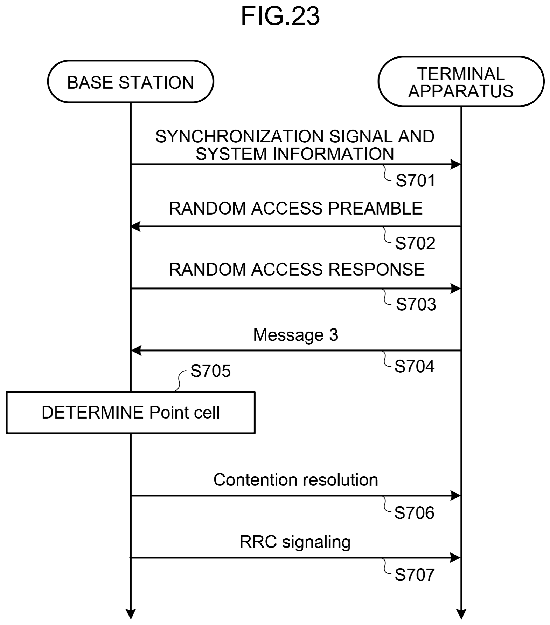

FIG. 23 is a diagram illustrating a sequence example of initial access processing related to the means of determining a point cell during 4-Step RACH processing. Here, the following will describe a point cell determination means when performing position measurement by transmitting a Sounding Reference Signal (SRS) at the time of transmitting Message 3. Hereinafter, initial access processing according to the present means will be described with reference to FIG. 23.

The base station 20 transmits a synchronization signal and system information to the terminal apparatus 40 (Step S701).

The terminal apparatus 40 receives the synchronization signal and the system information. Subsequently, the terminal apparatus 40 transmits the random access preamble to the base station 20 (Step S702).

The base station 20 transmits a random access response to the terminal apparatus 40 (Step S703). Here, in order to estimate the position of the terminal apparatus 40, transmission of a Sounding Reference Signal (SRS) may be requested by the random access response or the like.

The terminal apparatus 40 transmits Message 3 information in the random access to the base station 20 (Step S704). At this time, the terminal apparatus 40 transmits the SRS to the base station 20 together with Message 3.

The base station 20 determines a point cell using the terminal position information measured from the received SRS (Step S705). Subsequently, the base station 20 transmits contention resolution to the terminal apparatus 40 (Step S706). Here, the base station 20 may notify the terminal apparatus 40 of information of the point cell to be connected.

The base station 20 transmits RRC signaling information to the terminal apparatus 40 (Step S707). Here, the base station 20 may notify the terminal apparatus 40 of information of the point cell to be connected.

### <5-2-4. Sequence example according to M2-4>

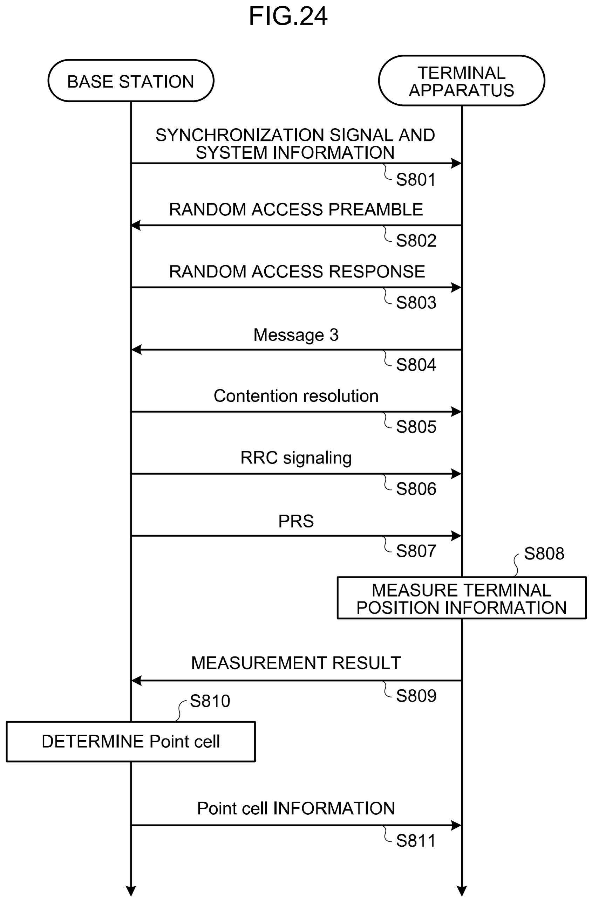

FIG. 24 is a diagram illustrating a sequence example of initial access processing related to the means of determining a point cell during 4-Step RACH processing. Here, the following will describe a point cell determination means when performing position measurement by transmitting a Positioning Reference Signal (PRS) after the random access. Hereinafter, initial access processing according to the present means will be described with reference to FIG. 24.

The base station 20 transmits a synchronization signal and system information to the terminal apparatus 40 (Step S801).

The terminal apparatus 40 receives the synchronization signal and the system information. Subsequently, the terminal apparatus 40 transmits the random access preamble to the base station 20 (Step S802).

The base station 20 transmits a random access response to the terminal apparatus 40 (Step S803).

The terminal apparatus 40 transmits Message 3 information in the random access to the base station 20 (Step S804).

The base station 20 transmits contention resolution to the terminal apparatus 40 (Step S805). Subsequently, the base station 20 transmits RRC signaling information to the terminal apparatus 40 (Step S806). Here, for the purpose of position measurement in the terminal apparatus 40, the base station 20 also transmits a Positioning Reference Signal (PRS) to the terminal apparatus 40 (Step S807).

The terminal apparatus 40 performs position measurement of the terminal apparatus 40 using the received PRS (Step S808). Subsequently, the terminal apparatus 40 notifies the base station 20 of the position measurement result regarding the terminal apparatus 40 (Step S809).

The base station 20 determines a point cell using the received terminal position information (Step S810). Subsequently, the base station 20 notifies the terminal apparatus 40 of information of the point cell to be connected (Step S811).

### <5-2-5. Sequence example according to M2-5>

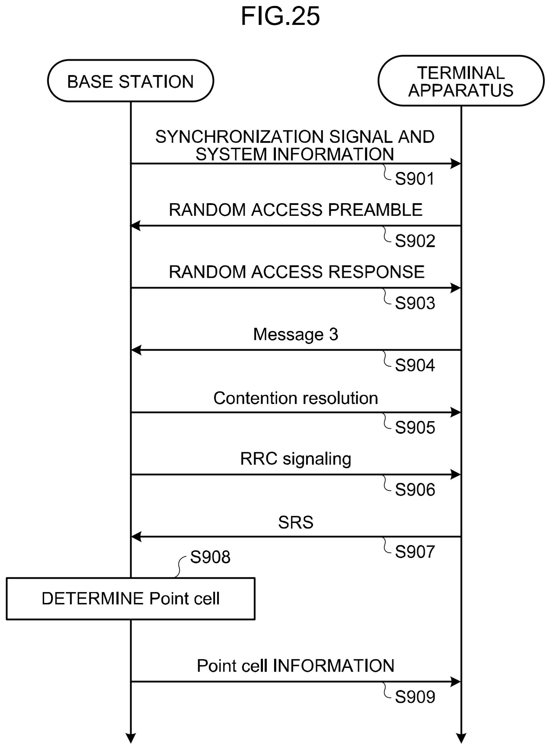

FIG. 25 is a diagram illustrating a sequence example of initial access processing related to the means of determining a point cell during 4-Step RACH processing. Here, the following will describe a point cell determination means when performing position measurement by transmitting a Sounding Reference Signal (SRS) after the random access. Hereinafter, initial access processing according to the present means will be described with reference to FIG. 25.

The base station 20 transmits a synchronization signal and system information to the terminal apparatus 40 (Step S901).

The terminal apparatus 40 receives the synchronization signal and the system information. Subsequently, the terminal apparatus 40 transmits the random access preamble to the base station 20 (Step S902).

The base station 20 transmits a random access response to the terminal apparatus 40 (Step S903).

The terminal apparatus 40 transmits Message 3 information in the random access to the base station 20 (Step S904).

The base station 20 transmits contention resolution to the terminal apparatus 40 (Step S905). Subsequently, the base station 20 transmits RRC signaling information to the terminal apparatus 40 (Step S906).

For the purpose of position measurement, the terminal apparatus 40 transmits a Sounding Reference Signal (SRS) to the base station 20 (Step S907).

The base station 20 measures the position of the terminal apparatus 40 using the received SRS, and determines the point cell using the terminal position information (Step S908). Subsequently, the base station 20 notifies the terminal apparatus 40 of information of the point cell to be connected (Step S909).

### <5-2-6. Sequence example according to M2-6>

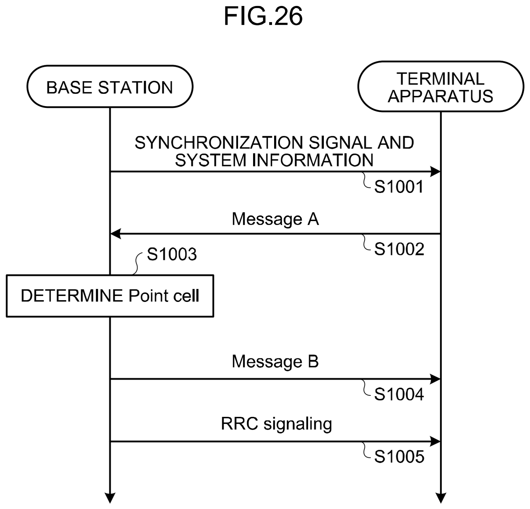

FIG. 26 is a diagram illustrating a sequence example of initial access processing related to the means of determining a point cell during 2-Step RACH processing. Here, the following will describe a point cell determination means when performing position measurement by transmitting a Sounding Reference Signal (SRS) at the time of transmitting Message A. Hereinafter, initial access processing according to the present means will be described with reference to FIG. 26.

The base station 20 transmits a synchronization signal and system information to the terminal apparatus 40 (Step S1001). Here, in order to estimate the position of the terminal apparatus 40, the base station 20 may request transmission of a Sounding Reference Signal (SRS) by system information or the like.

The terminal apparatus 40 receives the synchronization signal and the system information. Subsequently, the terminal apparatus 40 transmits the random access preamble and Message 3 information to the base station 20 (Step S1002). Here, this information may be referred to as Message A or may be referred to as another term. At this time, the terminal apparatus 40 transmits the SRS to the base station 20 together with Message A.

The base station 20 determines a point cell using the terminal position information measured from the received SRS (Step S1003).

The base station 20 transmits a random access response and contention resolution to the terminal apparatus 40 (Step S1004). This information may be referred to as Message B or may be referred to as another term. Here, the base station 20 may notify the terminal apparatus 40 of information of the point cell to be connected.

The base station 20 transmits RRC signaling information to the terminal apparatus 40 (Step S1005). Here, the base station 20 may notify the terminal apparatus 40 of information of the point cell to be connected.

### <5-2-7. Sequence example according to M2-7>

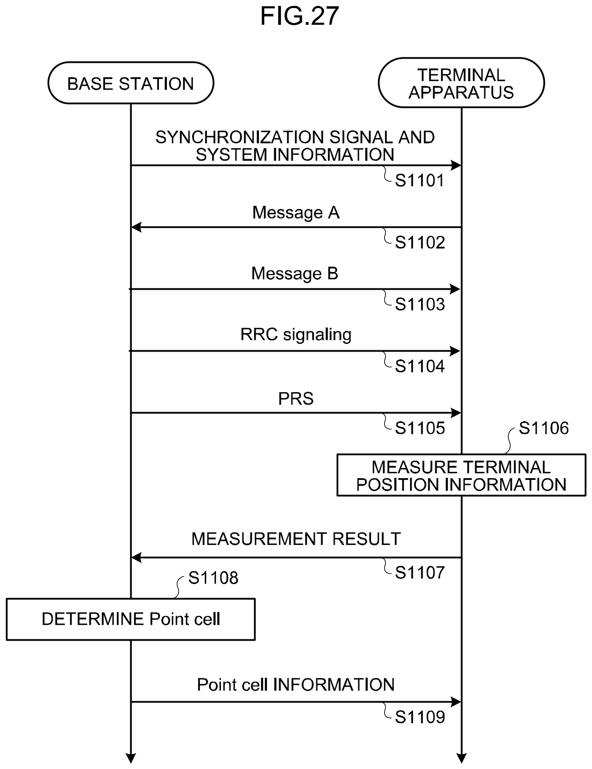

FIG. 27 is a diagram illustrating a sequence example of initial access processing related to the means of determining a point cell during 2-Step RACH processing. Here, the following will describe a point cell determination means when performing position measurement by transmitting a Positioning Reference Signal (PRS) after the random access. Hereinafter, initial access processing according to the present means will be described with reference to FIG. 27.

The base station 20 transmits a synchronization signal and system information to the terminal apparatus 40 (Step S1101).

The terminal apparatus 40 receives the synchronization signal and the system information. Subsequently, the terminal apparatus 40 transmits the random access preamble and Message 3 information to the base station 20 (Step S1102). Here, this information may be referred to as Message A or may be referred to as another term.

The base station 20 transmits a random access response and contention resolution to the terminal apparatus 40 (Step S1103). This information may be referred to as Message B or may be referred to as another term.

The base station 20 transmits RRC signaling information to the terminal apparatus 40 (Step S1104). Here, for the purpose of position measurement in the terminal apparatus 40, the base station 20 also transmits a Positioning Reference Signal (PRS) to the terminal apparatus 40 (Step S1105).

The terminal apparatus 40 measures the position of the terminal apparatus 40 using the received PRS (Step S1106). Subsequently, the terminal apparatus 40 notifies the base station 20 of the position measurement result regarding the terminal apparatus 40 (Step S1107).

The base station 20 determines a point cell using the received terminal position information (Step S1108). Subsequently, the base station 20 notifies the terminal apparatus 40 of information of the point cell to be connected (Step S1109).

### <5-2-8. Sequence example according to M2-8>

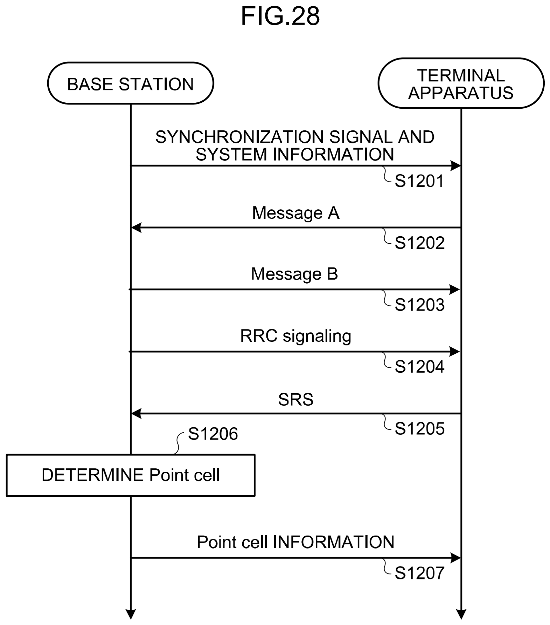

FIG. 28 is a diagram illustrating a sequence example of initial access processing related to the means of determining a point cell during 2-Step RACH processing. Here, the following will describe a point cell determination means when performing position measurement by transmitting a Sounding Reference Signal (SRS) after the random access. Hereinafter, initial access processing according to the present means will be described with reference to FIG. 28.

The base station 20 transmits a synchronization signal and system information to the terminal apparatus 40 (Step S1201).

The terminal apparatus 40 receives the synchronization signal and the system information. Subsequently, the terminal apparatus 40 transmits the random access preamble and Message 3 information to the base station 20 (Step S1202). Here, this information may be referred to as Message A or may be referred to as another term.

The base station 20 transmits a random access response and contention resolution to the terminal apparatus 40 (Step S1203). This information may be referred to as Message B or may be referred to as another term. Subsequently, the base station 20 transmits RRC signaling information to the terminal apparatus 40 (Step S1204) .

For the purpose of position measurement, the terminal apparatus 40 transmits a Sounding Reference Signal (SRS) to the base station 20 (Step S1205).

The base station 20 measures the position of the terminal apparatus 40 using the received SRS, and determines the point cell using the terminal position information (Step S1206). Subsequently, the base station 20 notifies the terminal apparatus 40 of information of the point cell to be connected (Step S1207).

### <5-3. Point cell determination means based on anchor cell>

Next, a sequence example of initial access processing related to a point cell determination means based on anchor cell will be described. The point cell determination means by the anchor cell may be one of the following (M3-1) to (M3-2).
(M3-1) Means of determining a point cell by an anchor cell after 4-Step RACH processing
(M3-2) Means of determining a point cell by an anchor cell after 2-Step RACH processing

Hereinafter, a sequence example of the initial access processing will be described for each of (M3-1) to (M3-2). The following processing is executed by, for example, the control unit 23 (the acquisition unit 231, the formation unit 232, the determination processing unit 233, the connection processing unit 234, or the measurement unit 235) of the base station 20 and the control unit 43 (determination processing unit 431 or communication control unit 432) of the terminal apparatus 40.

### <5-3-1. Sequence example according to M3-1>

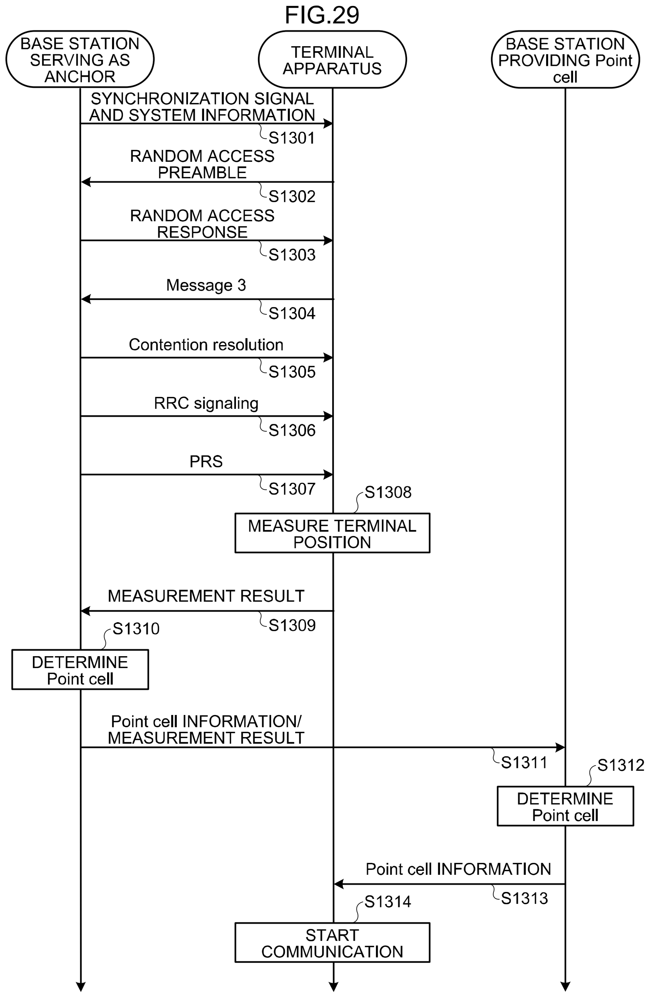

FIG. 29 is a diagram illustrating a sequence example of initial access processing related to the means of determining a point cell by an anchor cell after 4-Step RACH processing. The base station serving as an anchor illustrated in FIG. 29 and the base station providing the point cell may be the same base station or different base stations. Hereinafter, initial access processing according to the present means will be described with reference to FIG. 29.

The base station 20 serving as an anchor transmits a synchronization signal and system information to the terminal apparatus 40 (Step S1301).

The terminal apparatus 40 receives the synchronization signal and the system information. Subsequently, the terminal apparatus 40 transmits the random access preamble to the base station 20 serving as an anchor (Step S1302).

The base station 20 serving as an anchor transmits a random access response to the terminal apparatus 40 (Step S1303).

The terminal apparatus 40 transmits Message 3 information in random access to the base station 20 serving as an anchor (Step S1304).

The base station 20 serving as an anchor transmits contention resolution to the terminal apparatus 40 (Step S1305). Subsequently, the base station 20 serving as an anchor transmits RRC signaling information to the terminal apparatus 40 (Step S1306). Here, for the purpose of position measurement in the terminal apparatus 40, the base station 20 serving as an anchor also transmits a Positioning Reference Signal (PRS) to the terminal apparatus 40 (Step S1307).

The terminal apparatus 40 measures the terminal position using the received PRS (Step S1308).

Subsequently, the terminal apparatus 40 notifies the base station 20 serving as an anchor of the position measurement result (terminal position information) regarding the terminal apparatus 40 (Step S1309).

The base station 20 serving as an anchor may determine a point cell using the received terminal position information (Step S1310). Subsequently, the base station 20 serving as an anchor may transmit information regarding the determined point cell or may transmit a measurement result regarding the terminal position, to the base station 20 providing the point cell (Step S1311). Here, in a case where the base station 20 serving as an anchor and the base station 20 providing a point cell are the same base station, notification is unnecessary.

When having received the measurement result regarding the terminal position from the base station 20 serving as an anchor, the base station 20 providing the point cell may determine the point cell from the terminal position information notification of which is provided (Step S1312). Subsequently, the base station 20 providing the point cell notifies the terminal apparatus 40 of information regarding the point cell to be connected (Step S1313).

The terminal apparatus 40 starts communication in a point cell in addition to communication with a cell serving as an anchor (Step S1314). Here, instead of performing addition to the cell serving as an anchor, the terminal apparatus 40 may stop communication with the cell serving as an anchor and switch to communication to the point cell.

### <5-3-2. Sequence example according to M3-2>

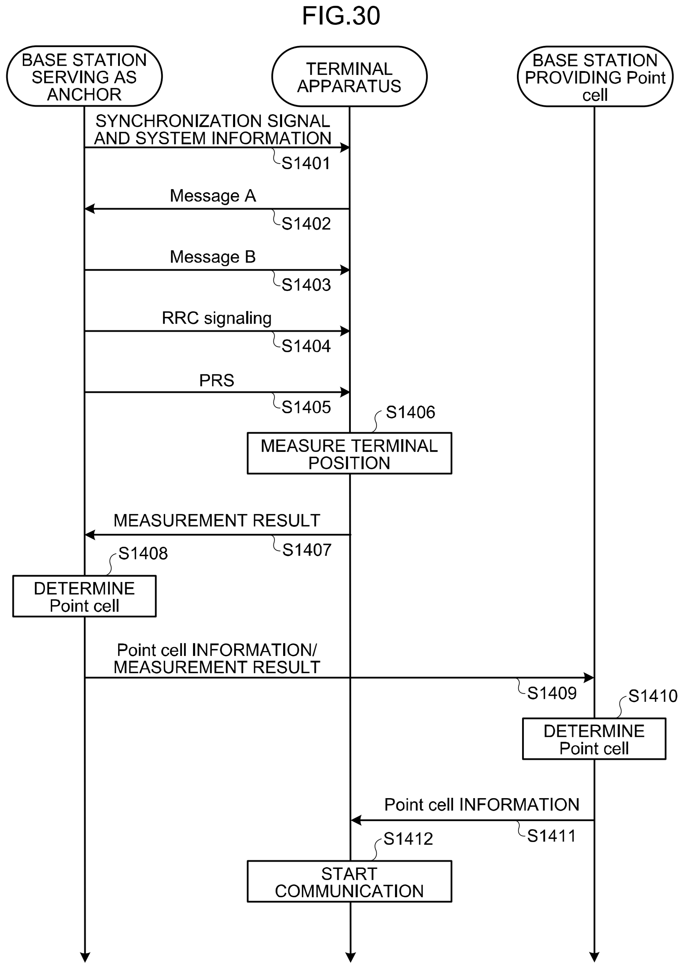

FIG. 30 is a diagram illustrating a sequence example of initial access processing related to the means of determining a point cell by an anchor cell after 2-Step RACH processing. The base station serving as an anchor illustrated in FIG. 30 and the base station providing the point cell may be the same base station or different base stations. Hereinafter, initial access processing according to the present means will be described with reference to FIG. 30.

The base station 20 serving as an anchor transmits a synchronization signal and system information to the terminal apparatus 40 (Step S1401).

The terminal apparatus 40 receives the synchronization signal and the system information. Subsequently, the terminal apparatus 40 transmits the random access preamble and Message 3 information to the base station 20 serving as an anchor (Step S1402). Here, this information may be referred to as Message A or may be referred to as another term.

The base station 20 serving as an anchor transmits a random access response and contention resolution to the terminal apparatus 40 (Step S1403). This information may be referred to as Message B or may be referred to as another term. Subsequently, the base station 20 serving as an anchor transmits RRC signaling information to the terminal apparatus 40 (Step S1404). Here, for the purpose of position measurement in the terminal apparatus 40, the base station 20 serving as an anchor also transmits a Positioning Reference Signal (PRS) to the terminal apparatus 40 (Step S1405).

The terminal apparatus 40 measures the terminal position using the received PRS (Step S1406).

Subsequently, the terminal apparatus 40 notifies the base station 20 serving as an anchor of the position measurement result (terminal position information) regarding the terminal apparatus 40 (Step S1407).

The base station 20 serving as an anchor may determine a point cell using the received terminal position information (Step S1408). Subsequently, the base station 20 serving as an anchor may transmit information regarding the determined point cell or may transmit a measurement result regarding the terminal position, to the base station 20 providing the point cell (Step S1409). Here, in a case where the base station 20 serving as an anchor and the base station 20 providing a point cell are the same base station, notification is unnecessary.

When having received the measurement result regarding the terminal position from the base station 20 serving as an anchor, the base station 20 providing the point cell may determine the point cell from the terminal position information notification of which is provided (Step S1410). Subsequently, the base station 20 providing the point cell notifies the terminal apparatus 40 of information regarding the point cell to be connected (Step S1411).

The terminal apparatus 40 starts communication in a point cell in addition to communication with a cell serving as an anchor (Step S1412). Here, instead of performing addition to the cell serving as an anchor, the terminal apparatus 40 may stop communication with the cell serving as an anchor and switch to communication to the point cell.

### <<6. Modification>>

The above-described embodiment is an example, and various modifications and applications are possible.

### <6-1. Functional separation>

The functions of the base station 20 of the present embodiment may be separated into a plurality of functions such as a Central Unit (CU), a Distributed Unit (DU), and a Radio Unit (RU). Hereinafter, a relationship between CU/DU/RU separation of functions of the base station 20 and pointforming will be described.

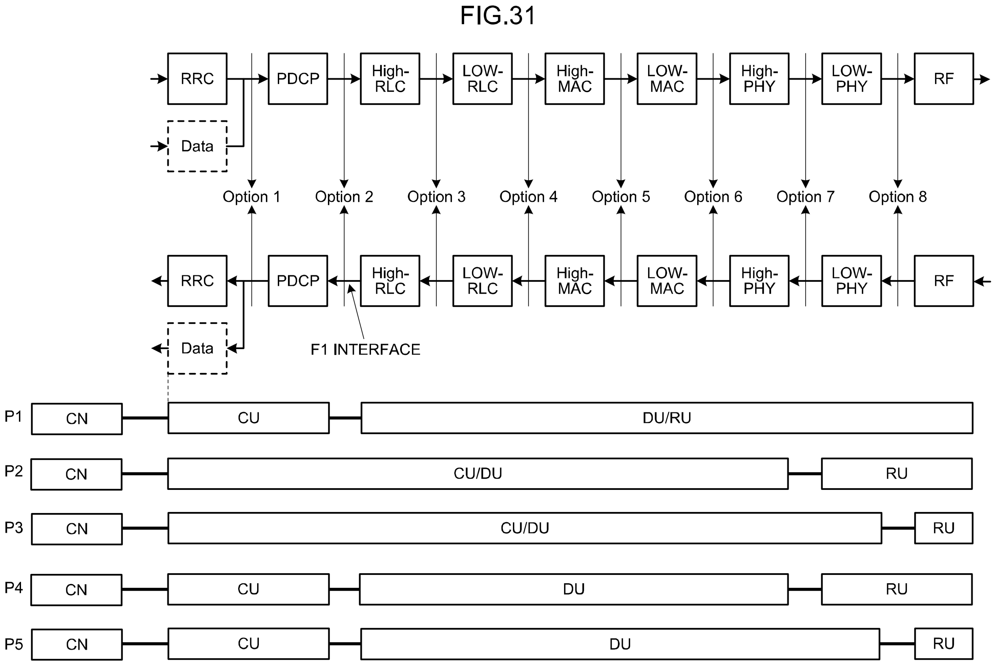

FIG. 31 is a diagram for illustrating an example of CU/DU/RU separation of functions of the base station 20. In the figure, CN represents a core network. In the current standard, functions of a base station (for example, gNB) are separated into two: a Central Unit (CU) and a Distributed Unit (DU). Here, the DU may include some or all of functions known by names such as Radio Remote Head (RRH), Remote Radio Unit (RRU), and Radio Unit (RU) as named in 3GPP LTE.

Currently, as illustrated in P1 of FIG. 31, a boundary line (also referred to as a split point or a division point) between the CU and the DU is set at a position (Option 2) between a Packet Data Convergence Protocol Layer (PDCP layer) and a Radio Link Control Layer (RLC layer) in a 3GPP protocol stack. In order to establish communication between the CU and the DU, 3GPP defines "F1" as an interface between these units. This interface is a logical interface. For example, the IP packet passes through the Ethernet (IEEE 802.3) to establish communication between the CU and the DU.

When the base station 20 performs pointforming, for example, it is allowable to have a configuration in which an entity (for example, a CU or a DU) that performs central control processes a Media Access Control Layer (MAC layer) or higher, and a transmission antenna group serving as a transmission point processes a Physical Layer (PHY layer) or lower.

For example, the processing (function) related to pointforming may be separated by Option 6, Option 7, or Option 8 illustrated in FIG. 31. When the processing is separated at Option 6, the central control entity processes the LoW-MAC layer or higher, and the transmission antenna group processes the High-PHY layer or lower. When the processing is separated at Option 7, the central control entity processes the High-PHY layer or higher, and the transmission antenna group processes the LoW-PHY layer or lower. In a case where the processing related to pointforming is separated at Option 8, the central control entity processes the LoW-PHY layer or higher, and the transmission antenna group processes the RF layer (Radio Frequency Layer) or lower. Of course, the separation of the treatment is not limited thereto. The processing may be separated at another Option (for example, one of Option 1 to Option 5).

Conceivable examples include separation of processing (functions) such as P1 to P5 illustrated in FIG. 31. The separation of the processing is not limited to the following example.
P1: Example of separating CU and DU/RU at Option 2
P2: Example of separating CU/DU and RU at Option 7
P3: Example of separating CU/DU and RU at Option 8
P4: Example of separating CU and DU at Option 2, and separating DU and RU at Option 7
P5: Example of separating CU and DU at Option 2, and separating DU and RU at Option 8

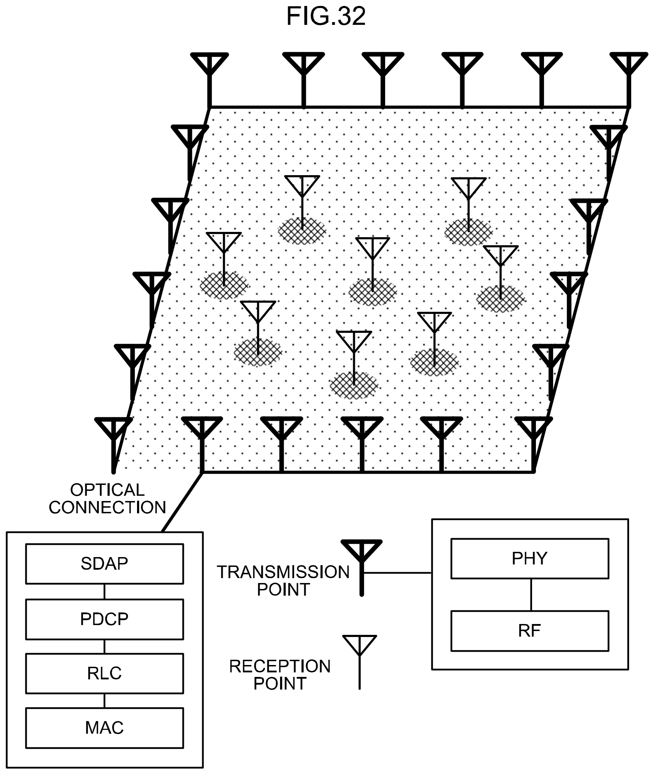

FIG. 32 is a diagram illustrating an example of separation of processing related to pointforming. Specifically, FIG. 32 is a diagram illustrating an example of dividing processing into a central control entity and a transmission antenna group at Option 6, for example. In the example of FIG. 32, the central control entity processes the SDAP/PDCP/RLC/MAC layers while the PHY/RF layers are processed at each transmission point.

This enables efficient pointforming processing.

### <6-2. Pointforming>

The above-described embodiment has described wireless communication using a technique (power concentration technique) of concentrating power at a specific point using a phase difference of a near field. However, the wireless communication according to the pointforming of the present embodiment may be near field communication. Here, the near-field communication may be communication within a distance shorter than the Fraunhofer distance, determined from the frequency band and the opening length of the transmission panel.

Furthermore, the above embodiment has described an example in which one base station 20 executes processing related to pointforming. However, a plurality of base stations 20 may cooperatively execute the processing related to pointforming. For example, a plurality of base stations 20 may form a point cell by cooperatively controlling each transmission antenna with another base station 20. The base station 20 may perform cooperative control with the relay station 30.

### <6-3. Reference signal>

The point cell is smaller compared to a conventional cell. Therefore, in a case where pointforming is applied to the radio access network, the radio access network is assumed to have a form in which one point cell is used by one terminal apparatus 40 alone. In a case where one point cell is used one terminal apparatus 40 alone, Multiuser Multiple-Input Multiple-Output (multiuser MIMO) with another terminal apparatus 40 will be unnecessary, making it possible to reduce the number of antenna ports.

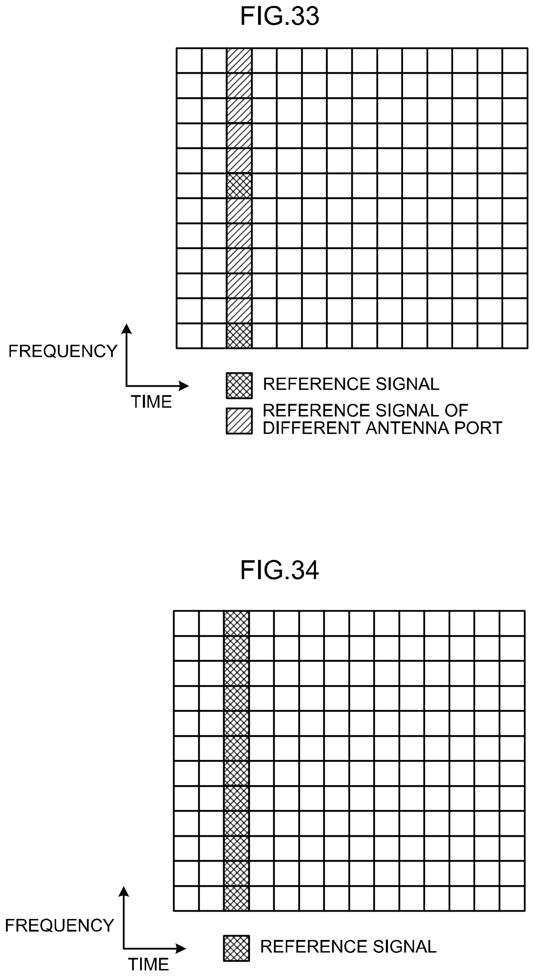

For example, simultaneous multiplexing of a plurality of terminals is performed in the conventional communication, and therefore, regarding mapping of reference signals, the reference signals are orthogonally mapped for each terminal apparatus 40 so as to be orthogonal in frequency and time resources. FIG. 33 is a diagram illustrating a mapping example of a conventional reference signal.

FIG. 34 is a diagram illustrating an example of mapping of reference signals according to the present embodiment. In a case where only one terminal apparatus 40 uses one point cell, there will be no multiplexing with another terminal apparatus 40. Therefore, for example, as illustrated in FIG. 34, the reference signal may be mapped in all the subcarriers of one symbol. This leads to improvement in the communication quality.

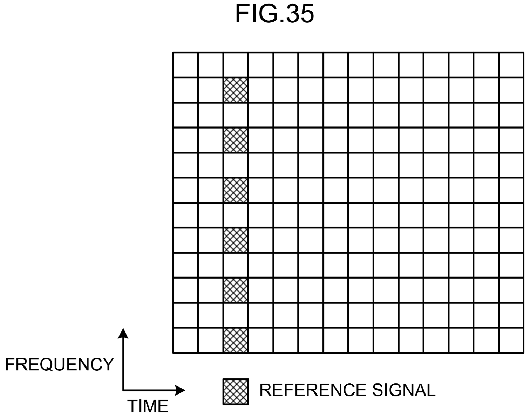

Naturally, the reference signal need not be mapped on all the subcarriers of one symbol. FIG. 35 is a diagram illustrating another example of mapping of reference signals according to the present embodiment. In the example of FIG. 35, the reference signals are mapped sparsely. A part of one symbol is assigned as data signal transmission regions. This makes it possible to increase data transmission resources.

### <6-4. Scheduling>

When only one terminal apparatus 40 uses one point cell, the terminal apparatus 40 does not need to share a communication resource with another terminal apparatus 40. Therefore, the base station 20 can constantly provide communication resources to the specific terminal apparatus 40 alone. Accordingly, the base station 20 may omit a part or all of conventional scheduling processing. For example, when performing pointforming (or when only one terminal apparatus 40 uses one point cell), the base station 20 may be configured not to perform at least one of scheduling of communication resources in the frequency direction and scheduling of communication resources in the time direction. In addition, the base station 20 may be configured not to perform cross-carrier scheduling in carrier aggregation or dual connectivity.

### <6-5. Other modifications>

In the above-described embodiment, the technology of the present disclosure has been described by taking an example of the communication processing between the base station 20 and the terminal apparatus 40. However, the application range of the present embodiment is not limited thereto. For example, the technology of the present disclosure is also applicable to communication between a plurality of communication apparatuses selected from the management apparatus 10, the base station 20, the relay station 30, and the terminal apparatus 40. Furthermore, the technology of the present disclosure is also applicable to communication between the management apparatuses 10, between the base stations 20, between the relay stations 30, or between the terminal apparatuses 40.

A control apparatus that controls the management apparatus 10, the base station 20, the relay station 30, and the terminal apparatus 40 of the present embodiment may be actualized by a dedicated computer system or a general-purpose computer system.

For example, a communication program for executing the above-described operations is stored in a computer-readable recording medium such as an optical disk, semiconductor memory, a magnetic tape, or a flexible disk and distributed. For example, the program is installed on a computer and the above processing is executed to achieve the configuration of the control apparatus. At this time, the control apparatus may be an apparatus (for example, a personal computer) external to the management apparatus 10, the base station 20, the relay station 30, or the terminal apparatus 40. Furthermore, the control apparatus may be an internal apparatus (for example, the control unit 13, the control unit 23, the control unit 33, or the control unit 43) of the management apparatus 10, the base station 20, the relay station 30, or the terminal apparatus 40.

Furthermore, the above communication program can be stored in a disk device included in a server on a network such as the Internet so as to be able to be downloaded to a computer, for example. Furthermore, the functions described above may be implemented by using operating system (OS) and application software in cooperation. In this case, the portions other than the OS may be stored in a medium for distribution, or the portions other than the OS may be stored in a server so as to be downloaded to a computer, for example.

Furthermore, among individual processing described in the above embodiments, all or a part of the processing described as being performed automatically may be manually performed, or the processing described as being performed manually can be performed automatically by known methods. In addition, the processing procedures, specific names, and information including various data and parameters illustrated in the above Literatures or drawings can be flexibly altered unless otherwise specified. For example, various types of information illustrated in each of the drawings are not limited to the information illustrated.

In addition, each of components of each device is provided as a functional and conceptional illustration and thus does not necessarily need to be physically constituted as illustrated. That is, the specific form of distribution/integration of each of the apparatuses is not limited to those illustrated in the drawings, and all or a part thereof can be functionally or physically distributed or integrated into optionally determined units in accordance with various loads and use status. This configuration by distribution or integration may be performed dynamically.

Furthermore, the above-described embodiments can be appropriately combined within a range implementable without contradiction of processing. Furthermore, the order of individual steps illustrated in the flowchart or the sequence diagram of the above-described embodiment can be altered as appropriate.

Furthermore, for example, the present embodiment can be implemented as any configuration constituting an apparatus or a system, for example, a processor as a large scale integration (LSI) or the like, a module using a plurality of processors or the like, a unit using a plurality of modules or the like, and a set obtained by further adding other functions to the unit, or the like (that is, a configuration of a part of the apparatus).

In the present embodiment, a system represents a set of a plurality of components (devices, modules (parts), or the like), and whether all the components are in the same housing would not be a big issue. Therefore, a plurality of devices housed in separate housings and connected via a network, and one device in which a plurality of modules are housed in one housing, are both systems.

Furthermore, for example, the present embodiment can adopt a composition of cloud computing in which one function is cooperatively shared and processed by a plurality of devices or devices via a network.

### <<7. Conclusion>>

The base station 20 forms a point cell by power concentration technique (pointforming). For example, the base station 20 performs cooperative control of the plurality of antennas to concentrate power at a specific point, thereby forming a point cell. Subsequently, the base station 20 executes processing for determining a point cell to which the terminal apparatus 40 belongs. For example, the base station 20 transmits, to the terminal apparatus 40, a plurality of synchronization signals for the terminal apparatus 40 to identify a point cell. Subsequently, based on the synchronization signal, the terminal apparatus 40 determines the point cell to which the terminal apparatus 40 belongs. Alternatively, the base station 20 determines the point cell PC to which the terminal apparatus 40 belongs based on information from the terminal apparatus 40. Subsequently, the terminal apparatus performs wireless communication using the determined point cell.

In this manner, in the present embodiment, the base station 20 performs processing for determining the point cell to which the terminal apparatus belongs. This makes it possible for the terminal apparatus 40 to efficiently access the point cell. This makes it possible for the communication system 1 to achieve high communication performance (for example, high frequency efficiency, low latency, and the like).

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technology can also have the following configurations.
(1) A base station comprising:
   a formation unit configured to form a point cell by concentrating power at a specific point using cooperative control of a plurality of antennas; and
   a determination processing unit configured to execute processing for determining the point cell to which a terminal apparatus belongs.
(2) The base station according to (1),
   wherein the formation unit forms a plurality of point cells covering a predetermined area, and
   the determination processing unit transmits, to the terminal apparatus, a plurality of synchronization signals for the terminal apparatus to identify the point cell.
(3) The base station according to (2),
   wherein the determination processing unit transmits the plurality of synchronization signals at the same time.
(4) The base station according to (2),
   wherein the determination processing unit transmits the plurality of synchronization signals in a state of being distributed at different times.
(5) The base station according to (1),
   wherein a wide cell that is a cell having a wider area than the point cell is able to be formed,
   the formation unit forms one or a plurality of wide cells covering a predetermined area and forms a plurality of point cells covering the wide cells, and
   after the terminal apparatus is connected to the wide cell, the determination processing unit transmits, to the terminal apparatus, a plurality of synchronization signals for the terminal apparatus to identify the point cell included in the wide cell to which the terminal apparatus belongs.
(6) The base station according to (5),
   wherein the formation unit forms a plurality of wide cells covering a predetermined area and forms a plurality of point cells covering at least one wide cell of the plurality of wide cells, and
   the determination processing unit transmits, to the terminal apparatus, a plurality of synchronization signals for the terminal apparatus to identify the wide cell, and after the terminal apparatus is connected to the wide cell determined based on the synchronization signals, the determination processing unit transmits, to the terminal apparatus, a plurality of synchronization signals for the terminal apparatus to identify the point cell included in the wide cell to which the terminal apparatus belongs.
(7) The base station according to (5) or (6),
   wherein, after the terminal apparatus is connected to the wide cell, the determination processing unit transmits a plurality of different reference signals associated with the plurality of point cells to the terminal apparatus, and determines the point cell to which the terminal apparatus belongs based on feedback information sent from the terminal apparatus regarding the reference signals.
(8) The base station according to (5) or (6), further comprising
   a connection processing unit configured to perform, after determination of the point cell to which the terminal apparatus belongs, processing for changing the cell to which the terminal apparatus is connected from the wide cell to the point cell.
(9) The base station according to (1),
   wherein a cell different from the point cell is able to be formed,
   the base station further comprises an acquisition unit configured to acquire position information of the terminal apparatus during a connection or after the connection of the terminal apparatus to the cell different from the point cell, and
   the determination processing unit determines the point cell to which the terminal apparatus belongs based on the position information of the terminal apparatus.
(10) The base station according to (9), further comprising
   a measurement unit configured to measure a position of the terminal apparatus during the connection or after the connection of the terminal apparatus to the cell different from the point cell,
   wherein the acquisition unit acquires the measured position of the terminal apparatus as the position information.
(11) The base station according to (9),
   wherein the acquisition unit acquires the position information from the terminal apparatus during the connection or after the connection of the terminal apparatus to the cell different from the point cell.
(12) The base station according to (1), further comprising
   an acquisition unit configured to acquire information from another base station to which the terminal apparatus is connected,
   wherein the determination processing unit determines the point cell to which the terminal apparatus belongs based on the information acquired from the another base station.
(13) The base station according to (12),
   wherein the acquisition unit acquires information regarding the terminal apparatus, from the another base station, and
   the determination processing unit determines the point cell to which the terminal apparatus belongs based on the information acquired from the another base station.
(14) The base station according to (12),
   wherein the another base station is configured to be capable of determining the point cell to which the terminal apparatus belongs,
   the acquisition unit acquires determination information regarding the point cell to which the terminal apparatus belongs, from the another base station, and
   the determination processing unit determines the point cell to which the terminal apparatus belongs based on the determination information acquired from the another base station.
(15) A terminal apparatus which is connectable to a base station capable of forming a point cell by concentrating power at a specific point using cooperative control of a plurality of antennas, the terminal apparatus comprising:
   a determination processing unit configured to execute processing for determining the point cell to which the terminal apparatus belongs; and
   a communication control unit configured to perform communication using the determined point cell.
(16) The terminal apparatus according to (15),
   wherein the terminal apparatus is configured to be capable of combining a plurality of bands using carrier aggregation or dual connectivity, and
   the communication control unit performs communication using at least one of the plurality of bands, as a band that provides the point cell.
(17) The terminal apparatus according to (16),
   wherein the communication control unit performs communication using at least one of the plurality of bands as a band that provides the point cell and using at least another band as a band that provides a wide cell, the wide cell being a cell having a wider area than the point cell.
(18) A communication method comprising:
   forming a point cell by concentrating power at a specific point using cooperative control of a plurality of antennas; and
   executing processing for determining the point cell to which a terminal apparatus belongs.
(19) A communication method executed by a terminal apparatus that is connectable to a base station capable of forming a point cell by concentrating power at a specific point using cooperative control of a plurality of antennas, the communication method comprising:
   executing processing for determining the point cell to which the terminal apparatus belongs; and
   performing communication using the point cell determined by the base station.
(20) A communication system comprising: a base station; and a terminal apparatus,
   wherein the base station includes:
   a formation unit configured to form a point cell by concentrating power at a specific point using cooperative control of a plurality of antennas; and
   a first determination processing unit configured to execute processing for determining the point cell to which the terminal apparatus belongs, and
   the terminal apparatus includes:
      a second determination processing unit configured to execute processing for determining the point cell to which the terminal apparatus belongs; and
      a communication control unit configured to perform communication using the point cell determined by the base station.

### Reference Signs List

1 COMMUNICATION SYSTEM
10 MANAGEMENT APPARATUS
20 BASE STATION
30 RELAY STATION
40 TERMINAL APPARATUS
11 COMMUNICATION UNIT
21, 31, 41 WIRELESS COMMUNICATION UNIT
12, 22, 32, 42 STORAGE UNIT
13, 23, 33, 43 CONTROL UNIT
211, 311, 411 TRANSMISSION PROCESSING UNIT
212, 312, 412 RECEPTION PROCESSING UNIT
213, 313, 413 ANTENNA
231, 331 ACQUISITION UNIT
232, 332 FORMATION UNIT
233, 333, 431 DETERMINATION PROCESSING UNIT
234, 334 CONNECTION PROCESSING UNIT
235, 335 MEASUREMENT UNIT
432 COMMUNICATION CONTROL UNIT
RAN RADIO ACCESS NETWORK
CN CORE NETWORK

## Claims

1. A base station comprising:
a formation unit configured to form a point cell by concentrating power at a specific point using cooperative control of a plurality of antennas; and
a determination processing unit configured to execute processing for determining the point cell to which a terminal apparatus belongs.

2. The base station according to claim 1,
wherein the formation unit forms a plurality of point cells covering a predetermined area, and
the determination processing unit transmits, to the terminal apparatus, a plurality of synchronization signals for the terminal apparatus to identify the point cell.

3. The base station according to claim 2,
wherein the determination processing unit transmits the plurality of synchronization signals at the same time.

4. The base station according to claim 2,
wherein the determination processing unit transmits the plurality of synchronization signals in a state of being distributed at different times.

5. The base station according to claim 1,
wherein a wide cell that is a cell having a wider area than the point cell is able to be formed,
the formation unit forms one or a plurality of wide cells covering a predetermined area and forms a plurality of point cells covering the wide cells, and
after the terminal apparatus is connected to the wide cell, the determination processing unit transmits, to the terminal apparatus, a plurality of synchronization signals for the terminal apparatus to identify the point cell included in the wide cell to which the terminal apparatus belongs.

6. The base station according to claim 5,
wherein the formation unit forms a plurality of wide cells covering a predetermined area and forms a plurality of point cells covering at least one wide cell of the plurality of wide cells, and
the determination processing unit transmits, to the terminal apparatus, a plurality of synchronization signals for the terminal apparatus to identify the wide cell, and after the terminal apparatus is connected to the wide cell determined based on the synchronization signals, the determination processing unit transmits, to the terminal apparatus, a plurality of synchronization signals for the terminal apparatus to identify the point cell included in the wide cell to which the terminal apparatus belongs.

7. The base station according to claim 5,
wherein, after the terminal apparatus is connected to the wide cell, the determination processing unit transmits a plurality of different reference signals associated with the plurality of point cells to the terminal apparatus, and determines the point cell to which the terminal apparatus belongs based on feedback information sent from the terminal apparatus regarding the reference signals.

8. The base station according to claim 5, further comprising
a connection processing unit configured to perform, after determination of the point cell to which the terminal apparatus belongs, processing for changing the cell to which the terminal apparatus is connected from the wide cell to the point cell.

9. The base station according to claim 1,
wherein a cell different from the point cell is able to be formed,
the base station further comprises an acquisition unit configured to acquire position information of the terminal apparatus during a connection or after the connection of the terminal apparatus to the cell different from the point cell, and
the determination processing unit determines the point cell to which the terminal apparatus belongs based on the position information of the terminal apparatus.

10. The base station according to claim 9, further comprising
a measurement unit configured to measure a position of the terminal apparatus during the connection or after the connection of the terminal apparatus to the cell different from the point cell,
wherein the acquisition unit acquires the measured position of the terminal apparatus as the position information.

11. The base station according to claim 9,
wherein the acquisition unit acquires the position information from the terminal apparatus during the connection or after the connection of the terminal apparatus to the cell different from the point cell.

12. The base station according to claim 1, further comprising
an acquisition unit configured to acquire information from another base station to which the terminal apparatus is connected,
wherein the determination processing unit determines the point cell to which the terminal apparatus belongs based on the information acquired from the another base station.

13. The base station according to claim 12,
wherein the acquisition unit acquires information regarding the terminal apparatus, from the another base station, and
the determination processing unit determines the point cell to which the terminal apparatus belongs based on the information acquired from the another base station.

14. The base station according to claim 12,
wherein the another base station is configured to be capable of determining the point cell to which the terminal apparatus belongs,
the acquisition unit acquires determination information regarding the point cell to which the terminal apparatus belongs, from the another base station, and
the determination processing unit determines the point cell to which the terminal apparatus belongs based on the determination information acquired from the another base station.

15. A terminal apparatus which is connectable to a base station capable of forming a point cell by concentrating power at a specific point using cooperative control of a plurality of antennas, the terminal apparatus comprising:
a determination processing unit configured to execute processing for determining the point cell to which the terminal apparatus belongs; and
a communication control unit configured to perform communication using the determined point cell.

16. The terminal apparatus according to claim 15,
wherein the terminal apparatus is configured to be capable of combining a plurality of bands using carrier aggregation or dual connectivity, and
the communication control unit performs communication using at least one of the plurality of bands, as a band that provides the point cell.

17. The terminal apparatus according to claim 16,
wherein the communication control unit performs communication using at least one of the plurality of bands as a band that provides the point cell and using at least another band as a band that provides a wide cell, the wide cell being a cell having a wider area than the point cell.

18. A communication method comprising:
forming a point cell by concentrating power at a specific point using cooperative control of a plurality of antennas; and
executing processing for determining the point cell to which a terminal apparatus belongs.

19. A communication method executed by a terminal apparatus that is connectable to a base station capable of forming a point cell by concentrating power at a specific point using cooperative control of a plurality of antennas, the communication method comprising:
executing processing for determining the point cell to which the terminal apparatus belongs; and
performing communication using the point cell determined by the base station.

20. A communication system comprising: a base station; and a terminal apparatus,
wherein the base station includes:
a formation unit configured to form a point cell by concentrating power at a specific point using cooperative control of a plurality of antennas; and
a first determination processing unit configured to execute processing for determining the point cell to which the terminal apparatus belongs, and
the terminal apparatus includes:
a second determination processing unit configured to execute processing for determining the point cell to which the terminal apparatus belongs; and
a communication control unit configured to perform communication using the point cell determined by the base station.
